# EUROPÄISCHE PATENTSCHRIFT

(11) **EP 1 603 685 B1**
(45) Veröffentlichungstag und Bekanntmachung des Hinweises auf die Patenterteilung: **16.08.2006**
(21) Anmeldenummer: 04716579.0
(22) Anmeldetag: 03.03.2004
(51) Int. Cl.: B05D 7/00, C09D 5/02

(54) **VERFAHREN ZUR VERBESSERUNG DER ZWISCHENSCHICHTHAFTUNG IN EINER MEHRSCHICHTLACKIERUNG**
METHOD FOR IMPROVING THE ADHESION OF THE INTERMEDIATE LAYER IN A MULTI-LAYER PAINT FINISH
PROCEDE PERMETTANT D'AMELIORER L'ADHERENCE DE LA COUCHE INTERMEDIAIRE D'UNE PEINTURE MULTICOUCHE

(30) Priorität: 15.03.2003 DE 10311476
(43) Veröffentlichungstag der Anmeldung: 14.12.2005
(73) Patentinhaber: BASF Coatings AG, 48165 Münster (DE)
(72) Erfinder: WEGNER, Egon, 48268 Greven (DE); SCHWARTE, Stephan, 48282 Emsdetten (DE)
(86) Internationale Anmeldenummer: PCT/EP2004/002100
(87) Internationale Veröffentlichungsnummer: WO 2004/082853

(56) Entgegenhaltungen:
- DE-A- 10 027 290
- DE-A- 10 039 262
- DE-A- 19 953 445
- DE-C- 10 006 673

## Beschreibung

Die Erfindung betrifft ein Verfahren zur Verbesserung der Zwischenschichthaftung in einer Mehrschichtlackierung.

Ein Verfahren zur Herstellung von mehrschichtigen Lackierungen, bei dem
1) das Substrat mit einem Grundierungsstoff, insbesondere einem Elektrotauchlack, beschichtet wird,
2) die in Stufe 1 aufgebrachte Grundierungsschicht, insbesondere eine Elektrotauchlackschicht, ggf. vorgetrocknet und gehärtet wird,
3) die gehärtete Grundierungsschicht, insbesondere Elektrotauchlackschicht, mit einem ersten wässrigen Lack beschichtet wird,
4) die in Stufe 3 aufgetragene Lackschicht ggf. vorgetrocknet und ohne Härtungsschritt mit einem zweiten wässrigen Lack beschichtet wird,
5) die in Stufe 4 aufgebrachte Lackschicht mit einem transparenten Lack beschichtet wird und
6) die Schichten gemeinsam gehärtet werden,
sind beispielsweise aus dem europäischen Patent EP 0 788 523 B 2 bekannt. Im Folgenden wird dieses Verfahren der Kürze halber als »integriertes Nass-in-nass-Verfahren« bezeichnet. Hierbei resultiert eine Mehrschichtlackierung aus
- Grundierung, insbesondere Elektrotauchlackierung 1,
- Wasserbasislackierung oder Funktions- oder Füllerlackierung 2,
- Wasserbasislackierung 3 und
- Klarlackierung 4.

Mit diesem Verfahren ist es möglich Mehrschichtlackierungen mit besonders geringen Schichtdicken zu erhalten, ohne dass es zu Qualitätseinbußen insbesondere bei der Steinschlagbeständigkeit kommt. Wesentlich ist dabei, dass der in der Stufe 3) applizierte wässrige Lack oder Wasserbasislack 1 ein Bindemittel enthält, das aus einem wasserverdünnbaren Polyurethanharz besteht, das eine Säurezahl von 10 bis 60 und ein zahlenmittleres Molekulargewicht von 4.000 bis 25.000 aufweist und herstellbar ist, indem
- ein Polyester- und/oder Polyetherpolyol mit einem zahlenmittleren Molekulargewicht von 400 bis 5.000 oder ein Gemisch aus solchen Polyester- und Polyetherpolyolen,
- ein Polyisocyanat oder ein Gemisch aus Polyisocyanaten,
- eine Verbindung, die mindestens eine gegenüber Isocyanatgruppen reaktive und mindestens eine zur Anionenbildung befähigte Gruppe im Molekül aufweist, oder ein Gemisch aus solchen Verbindungen und gegebenenfalls
- eine Hydroxyl- und/oder Aminogruppen enthaltende organische Verbindung mit einem Molekulargewicht von 40 bis 400 oder ein Gemisch aus solchen Verbindungen miteinander umgesetzt werden und das entstandene Reaktionsprodukt wenigstens teilweise neutralisiert wird.

Aus den deutschen Patentanmeldungen DE 198 41 842 A 1, DE 100 01 442 A 1 und DE 100 55 464 A 1 sind strukturviskose, von organischen Lösemitteln und externen Emulgatoren freie Pulverklarlack-Slurries bekannt, die durch
1) Emulgieren einer organische Lösung, enthaltend Bindemittel und Vernetzer, wodurch eine Emulsion vom Typ Öl-in-Wasser resultiert,
2) Entfernen des organischen Lösemittels oder der organische Lösemittel und
3) teilweisen oder völligen Ersatz des entfernten Lösemittelvolumens durch Wasser, wodurch die Pulverklarlack-Sluny mit festen sphärischen Partikel resultiert,
herstellbar sind. Dieses Verfahren wird im Folgenden als »Sekundärdispersionsverfahren« bezeichnet.

Außerdem sind aus der deutschen Patentanmeldung DE 101 26 651 A 1 und dem deutschen Patent 100 06 673 C 1 Pulverklarlack-Slurries bekannt, die herstellbar sind, indem man
1) mindestens einen Bestandteil der Pulverklarlack-Sluny in flüssigem, insbesondere geschmolzenem, Zustand in einem wässrigen Medium emulgiert, wodurch sich eine wässrige Emulsion flüssiger Partikel bildet, und
2) die Emulsion abkühlen lässt, sodass sich eine wässrige Suspension dimensionsstabiler Partikel bildet.

Im Folgenden wird dieses Verfahren als »Schmelzeemulgierverfahren« bezeichnet.

Außerdem werden im Folgenden die Pulverklarlack-Slurries, die mit Hilfe des Sekundärdispersionsverfahrens oder den Schmelzeemulgierverfahrens hergestellt worden sind als »Pulverklarlack-Slurries der zweiten Generation« bezeichnet.

Werden diese bekannten, durch das Sekundärdispersionsverfahren oder Schmelzeemulgierverfahren hergestellten Pulverklarlack-Slurries der zweiten Generation an Stelle des Zweikomponentenklarlacks in der Stufe 5) des aus dem europäischen Patent EP 0 788 523 B 2 bekannten integrieren Nass-in-nass-Verfahrens eingesetzt, resultieren Mehrschichtlackierungen, die sehr gute optische Eigenschaften, ein sehr guten Verlauf, eine sehr gute Zwischenschichthaftung, eine hohe Chemikalienbeständigkeit und Witterungsbeständigkeit aufweisen. Außerdem sind die Mehrschichtlackierungen frei von Kochern und von Rissen (»mud cracking«). In der Praxis hat es sich aber gezeigt, dass die Haftung zwischen der Wasserbasislackierung 2 und der Klarlackierung nach der Belastung mit Kondenswasser und/oder mit Steinschlag verloren geht, sodass es bei der nachfolgenden Belastung mit Dampfstrahlen und/oder heißen Wasserstrahlen zur Enthaftung, d. h. Klarlackdelamination, kommt.

Dieses Problem tritt bei den aus den deutschen Patentanmeldungen DE 199 48 004 A 1 und DE 100 39 262 A bekannten, mit Hilfe des integrierten Nass-in-nass Verfahrens Mehrschichtlackierungen nicht in dem Umfang auf. Allerdings werden die Klarlackierungen dieser Mehrschichtlackierungen aus Pulverklarlack-Slurries hergestellt, die durch Extrusion der Bestandteile, Zerkleinern der resultierenden abgekühlten Schmelze, Trockenvermahlung der resultierenden Chips und Naßvermahlung hergestellt werden, wie dies beispielsweise aus der europäischen Patentanmeldung EP 0 652 264 A 1, der internationalen Patentanmeldung WO 96/32452 A 1, dem amerikanischen Patent US 4,268,542 A 1 oder den deutschen Patentanmeldungen DE 195 18 392 A 1, DE 196 13 547 A 1 und DE 198 14 471 A 1 bekannt ist. Im Folgenden werden die mit Hilfe dieses Verfahrens hergestellten Pulverklarlack-Slurries als »Pulverklarlack-Slurries der ersten Generation« bezeichnet.

Dieses Verfahren zur Herstellung der Pulverklarlack-Slurries der ersten Generation ist aber erheblich aufwändiger als das Sekundärdispersionsverfahren und das Schmelzeemulgierverfahren. Außerdem werden Pulverklarlack-Slurries der zweiten Generation bei ihrer Herstellung mechanisch geringer belastet als die Pulverklarlack-Slurries der ersten Generation. Des Weiteren können die Pulverklarlack-Slurries der zweiten Generation in ihrer stofflichen Zusammensetzung sehr viel breiter variiert werden als die Pulverklarlack-Slurries der ersten Generation.

Somit würde dem Einsatz der Pulverklarlack-Slurries der zweiten Generation in dem integrierten Nass-in-nass-Verfahren der Vorzug vor dem Einsatz der Pulverklarlack-Slurries der ersten Generation gegeben werden, wenn es nur gelänge, die Probleme der Zwischenschichthaftung nach der Belastung mit Kondenswasser und/oder Steinschlag in den betreffenden Mehrschichtlackierungen zu beheben.

Aus dem deutschen Patent DE 100 27 290 C 2 und der deutschen Patentanmeldung DE 100 27 292 A1 sind Mehrschichtlackierungen bekannt, die nach dem integrierten Nass-in-nass-Verfahren hergestellt werden können. Dabei können unter anderem auch Pulverklarlack-Slurries der zweiten Generation verwendet werden.

Die in der Stufe 3) eingesetzten wässrigen Lacke können aus einer Vielzahl von wässrigen Füllem oder Wasserbasislacken ausgewählt werden.

So sollen alle in den Druckschriften EP 0 401 565 A 1 oder EP 0 817 US 4,537,926 A 1, EP 0 529 335 A 1, EP 0 595 186 A 1, EP 0 639 660 A 1, DE 44 38 504 A 1, DE 43 37 961 A 1, WO 89/10387, US 4,450,200 A 1, US 4,614,683 A 1 oder WO 490/26827 beschriebenen wässrigen Füllem und alle in den Druckschriften EP 0 089 497 A 1, EP 0 256 540 A 1, EP 0 260 447 A 1, EP 0 297 576 A 1, WO 96/12747, EP 0 523 610 A 1, EP 0 228003A1, EP0397806A 1, EP0574417A1, EP0531 510 A 1, EP 0 581 211 A 1, EP 0 708 788 A 1, EP 0 593 454 A 1, DE 43 28 092 A 1, EP 0 299 148 A 1, EP 0 394 737 A 1, EP 0 590 484 A 1, EP 0 234 362 A 1, EP 0 234 361 A 1, EP 0 543 817 A 1, WO 95/14721, EP 0 521 928 A 1, EP 0 522 420 A 1, EP 0 522 419 A 1,EP 0 649 865 A 1 , EP 0 536 712 A 1, EP 0 596 460 A 1, EP 0 596 461 A 1, EP 0 584 818 A 1, EP 0 669 356 A 1, EP 0 634 431 A 1, EP 0 678 536 A 1, EP 0 354 261 A 1, EP 0 424 705 A 1, WO 97/49745, WO 97/49747, EP 817 684 A 1 beschriebenen Wasserbasislacke in Betracht kommen.

Einige dieser Wasserbasislacke enthalten dispergierte Pfropfmischpolymerisate, deren Partikel aus
- einem hydrophoben Kern aus mindestens einem einpolymerisierten olefinisch ungesättigten Monomeren und
- einer hydrophilen Schale, die mindestens ein Polyurethan enthält oder hieraus besteht,
bestehen und durch radikalische Polymerisation der Monomeren der Gegenwart eines Polyurethans mit terminalen und/oder lateralen Allyl- und/oder (Meth)Acrylatgruppen hergestellt werden. Es wird nicht zwischen diesen Pfropfmischpolymerisaten und anderen Polyurethanen, bei denen es sich nicht um Pfropfmischpolymerisate handelt, hinsichtlich der anwendungstechnischen Eigenschaften der hiermit hergestellten Lackierungen differenziert.

Aus den Beispielen des deutschen Patents DE 100 27 290 C 2 und der deutschen Patentanmeldung DE 100 27 292 A 1 gehen aber lediglich Mehrschichtlackierungen hervor, die nach dem integrierten Verfahren des Europäischen Patents EP 0 788 523 B 2 mit Pulverklarlack-Slurries der ersten Generation hergestellt werden, sodass diese Druckschriften keine Anregungen und Hinweise zur Lösung der geschilderten Probleme der Zwischenschichthaftung bieten.

Aufgabe der vorliegenden Erfindung ist es daher, ein neues Verfahren zur Verbesserung der Zwischenschichthaftung in einer Mehrschichtlackierung, die mit Hilfe eines integrierten Nass-in-nass-Verfahrens durch
(I) Applikation mindestens eines Grundierungsstoffes 1 auf die Oberfläche eines Substrats und Trocknen der resultierenden Grundierungsschicht(en) 1, insbesondere der Elektrotauchlackschicht(en) 1, oder Härten der Grundierungsschicht(en) 1, wodurch mindestens eine Grundierung 1 resultiert,
(II) Applikation mindestens eines Wasserbasislacks 2 auf die äußere Oberfläche der oder den Grundierung(en) 1 oder der Grundierung(en) 1 und Trocknen der resultierenden Wasserbasislackschicht(en) 2, ohne sie vollständig zu härten,
(III) Applikation mindestens eines Wasserbasislacks 3 auf die äußere Oberfläche der getrockneten Wasserbasislackschicht(en) 1 und Trocknen der resultierenden Wasserbasislackschicht(en) 3, ohne sie vollständig zu härten,
(IV) Applikation mindestens einer strukturviskosen Pulverklarlack-Slurry 4 der zweiten Generation auf die äußere Oberfläche der getrockneten Wasserbasislackschicht(en) 3 und Trocknen der resultierenden Klarlackschicht(en) 4 und
(V) gemeinsame Härtung der getrockneten Klarlackschicht(en) 4, der getrockneten Wasserbasislackschicht(en) 2 und der getrockneten Wasserbasislackschicht(en) 2 sowie der getrockneten Grundierungsschicht(en) 1, wodurch die Mehrschichtlackierung aus
   (1) mindestens einer Grundierung 1,
   (2) mindestens einer Wasserbasislackierung oder Funktions- oder Füllerlackierung 2,
   (3) mindestens einer Wasserbasislackierung 3
   (4) mindestens einer Klarlackierung 4
   resultiert,
hergestellt wird, bereitzustellen, durch das insbesondere die Haftung zwischen der oder den Wasserbasislackierung(en) 3 und der oder den Klarlackierung(en) 4 signifikant verbessert wird, sodass es nach der Belastung mit Kondenswasser und/oder Steinschlag und der nachfolgenden Belastung mit Dampfstrahlen und/oder heißen Wasserstrahlen nicht mehr zu einer Klarlackdelamination kommt.

Dabei sollen die bekannten vorteilhaften Eigenschaften der Mehrschichtlackierungen, insbesondere ihre sogenannte Automobilqualität (vgl. das Europäische Patent EP 0 352 298 B1, Seite 15, Zeile 42 bis Seite 17, Zeile 40) leiden.

Demgemäß wurde das neue Verfahren zur Verbesserung der Zwischenschichthaftung in einer Mehrschichtlackierung, die mit Hilfe eines integrierten Nass-in-nass-Verfahrens durch
(I) Applikation mindestens eines Grundierungsstoffes auf die Oberfläche eines Substrats und Trocknen der resultierenden Grundierungsschicht(en) 1, ohne sie vollständig zu härten, oder Härten der Grundierungsschicht(en) 1, wodurch mindestens eine Grundierung 1 resultiert,
(II) Applikation mindestens eines Wasserbasislacks 2 auf die äußere Oberfläche der Grundierungsschicht(en) 1 oder der Grundierung(en) 1 und Trocknen der resultierenden Wasserbasislackschicht(en) 2, ohne sie vollständig zu härten,
(III) Applikation mindestens eines Wasserbasislacks 3 auf die äußere Oberfläche der getrockneten Wasserbasislackschicht(en) 1 und Trocknen der resultierenden Wasserbasislackschicht(en) 3, ohne sie vollständig zu härten,
(IV) Applikation mindestens einer strukturviskosen Pulverklarlack-Slurry 4, herstellbar durch
   (α) ein Sekundärdispersionsverfahren durch Emulgieren einer organische Lösung, enthaltend Bindemittel und Vemetzer, wodurch eine Emulsion vom Typ Öl-in-Wasser resultiert, Entfernen des organischen Lösemittels oder der organische Lösemittel teilweisen oder völligen Ersatz des entfernten Lösemittelvolumens durch Wasser, wodurch die Pulverklarlack-slurry mit sphärischen dimensionsstabilen Partikeln resultiert, oder deutlich
   (β) ein Schmelzeemulgierverfahren, bei dem man mindestens einen Bestandteil der Pulverklarlack-Slurry in flüssigem, insbesondere geschmolzenem, Zustand in einem wässrigen Medium emulgiert, wodurch sich eine wässrige Emulsion flüssiger Partikel bildet, und die Emulsion abkühlen lässt, sodass sich eine wässrige Suspension dimensionsstabiler Partikel bildet;
   auf die äußere Oberfläche der getrockneten Wasserbasislackschicht(en) 3 und Trocknen der resultierenden Klarlackschicht(en) 4 und
(V) gemeinsame Härtung der getrockneten Klarlackschicht(en) 4, der getrockneten Wasserbasislackschicht(en) 3 und der getrockneten Wasserbasislackschicht(en) 2 sowie der Grundierungsschicht(en) 1, wodurch die Mehrschichtlackierung aus mindestens einer Grundierung 1, mindestens einer Wasserbasislackierung oder Funktions- oder Füllerlackierung 2, mindestens einer Wasserbasislackierung 3 und mindestens einer Klarlackierung 4 resultiert;
hergestellt wird, wobei der oder die in Stufe (II) eingesetzte(n) Wasserbasislack(e) 2 als Bindemittel mindestens ein dispergiertes Pfropfmischpolymerisat (A/B) enthalten, dessen Partikel aus einem hydrophoben Kern (A) aus mindestens einem einpolymerisierten olefinisch ungesättigten Monomeren (a) und einer hydrophilen Schale (B), die mindestens ein hydrophiles Polyurethan (b) enthält oder hieraus besteht, aufgebaut sind und durch die radikalische (Co)Polymerisation der Monomeren (a) in der Gegenwart mindestens eines hydrophilen Polyurethans (b 1), enthaltend mindestens eine olefinisch ungesättigte Gruppe, ausgewählt aus der Gruppe bestehend aus
- lateralen und terminalen Ethenylarylengruppen;
- lateralen olefinisch ungesättigten Gruppen, die an cycloaliphatische Gruppen gebunden sind, die Glieder der Polymerhauptketten darstellen;
- lateralen cycloolefinisch ungesättigten Gruppen, die Glieder der Polymerhauptketten darstellen;
- terminalen olefinisch ungesättigten Gruppen, die an cycloaliphatische Gruppen gebunden sind, die die Endgruppen der Polymerhauptketten darstellen;
- terminalen cycloolefinisch ungesättigten Gruppen, die die Endgruppen der Polymerhauptketten darstellen; und
- lateralen und terminalen, olefinisch ungesättigten Gruppen, die durch Umsetzung von Polyurethanen mit Anhydriden von alpha,beta-ungesättigten Carbonsäuren erhalten werden;
hergestellt werden.

Im Folgenden wird das neue Verfahren zur Verbesserung der Zwischenschichthaftung in einer Mehrschichtlackierung, die mit Hilfe eines integrierten Nass-in-nass-Verfahrens hergestellt wird, als »erfindungsgemäßes Verfahren« bezeichnet.

Für den Fachmann war es überraschend und nicht vorhersehbar, dass durch eine Verwendung des Pfropfmischpolymerisats (A/B) als Bindemittel in dem in der Stufe (III) zur Herstellung der Wasserbasislackierung 2 verwendeten Wasserbasislack 2 die Haftung zwischen der darüber liegenden Wasserbasislackierung 3 und der Klarlackierung 4 verbessert werden konnte. Insbesondere konnte die Zwischenschichthaftung so weit verbessert werden, dass auch nach der Belastung mit Steinschlag und/oder Kondenswasser keine Klarlackdelamination bei der nachträglichen Belastung der Mehrschichttackierung mit Dampfstrahlen und/oder heißen Wasserstrahlen mehr eintrat.

Besonders überraschend war, dass bei Verwendung des Pfropfmischpolymerisats (A/B) in dem Wasserbasislack 2 gleichzeitig eine Verbesserung der Kochergrenze in der Wasserbasislackierung 3 und der Klarlackierung 4 erzielt werden konnte.

Insgesamt war es überraschend, dass die mit Hilfe des erfindungsgemä-ßen Verfahrens hergestellten Mehrschichtlackierungen in vollem Umfang die von den Automobilherstellern geforderte Automobilqualität aufwiesen.

Das erfindungsgemäße Verfahren geht aus von einem Substrat.

Als Substrate kommen alle zu lackierenden Oberflächen, die durch eine Härtung der hierauf befindlichen Lackierungen unter Anwendung von Hitze nicht geschädigt werden, in Betracht; das sind z. B. die erfindungsgemäßen Formteile, Folien und Fasern, Metalle, Kunststoffe, Holz, Keramik, Stein, Textil, Faserverbunde, Leder, Glas, Glasfasem, Glas- und Steinwolle, mineral- und harzgebundene Baustoffe, wie Gips- und Zementplatten oder Dachziegel, sowie Verbunde dieser Materialien. Demnach ist das erfindungsgemäße Verfahren für die Lackierung von Fortbewegungsmitteln, wie Wasserfahrzeuge, Schienenfahrzeuge, Flugzeuge, mit Muskelkraft betriebene Fahrzeuge und Kraftfahrzeuge, insbesondere Automobile, von Möbeln, Türen, Fenstern und Bauwerken im Innen- und Außenbereich sowie für die industrielle Lackierung, inklusive Coil Coating, Container Coating und die Imprägnierung oder Beschichtung elektrotechnischer Bauteile, in Betracht. Im Rahmen der industriellen Lackierungen eignet sich das erfindungsgemäße Verfahren für die Lackierung praktisch aller Teile für den privaten oder industriellen Gebrauch, wie Radiatoren, Haushaltsgeräte, Kleinteile aus Metall wie Schrauben und Muttem, Radkappen, Felgen, Emballagen oder elektrotechnische Bauteile wie Motorwicklungen oder Transformatorwicklungen. Insbesondere wird das erfindungsgemäße Verfahren für die Lackierung von Automobilkarosserien eingesetzt.

Als Substrate kommen auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) in Betracht. Die zu lackierenden Kunststoffe können selbstverständlich auch Polymerblends, modifizierte Kunststoffe oder faserverstärkte Kunststoffe sein. Es können auch die üblicherweise im Fahrzeugbau, insbesondere Automobilbau, eingesetzten Kunststoffe zum Einsatz kommen.

Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung 1 versehen werden.

Im Falle elektrisch leitfähiger Substrate können Grundierungen 1 verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Beispiele geeigneter KTL 1 werden in der japanischen Patentanmeldung 1975-142501 (japanische Offenlegungsschrift JP 52-065534 A 2, Chemical Abstracts Referat Nr**.** 87: 137427) oder den Patentschriften US 4,375,498 A 1, US 4,537,926 A 1, US 4,761,212 A 1, EP 0 529 335 A 1, DE 41 25 459 A 1, EP 0 595 186 A 1, EP 0 074 634 A 1, EP 0 505 445 A 1, DE4235778A 1, EP 0 646 420 A 1, EP0639660A 1, EP 0 817 648 A 1, DE 195 12 017 C 1, EP 0 192 113 A 2, DE 41 26 476 A 1 oder WO 98/07794 beschrieben.

Vorzugsweise werden ETL, insbesondere KTL, als Grundierungen 1 verwendet.

Bei dem erfindungsgemäßen Verfahren wird im Verfahrenschritt (I) mindestens eine, insbesondere eine, Grundierung 1, vorzugsweise ein ETL 1, insbesondere ein KTL 1, auf die Oberfläche des Substrats aufgebracht. Die Applikation des ETL 1, insbesondere des KTL 1, erfolgt in üblicher und bekannter Weise durch anodische oder kathodische, insbesondere kathodische, Elektrotauchlackierung.

Hiernach wird oder werden die resultierende Grundierungsschicht(en) 1, insbesondere die Elektrotauchlackschicht(en) 1, getrocknet, ohne sie vollständig zu härten.

Die Trocknung kann während einer gewissen Ruhezeit erfolgen. Diese kann eine Dauer von 30 s bis 2 h, vorzugsweise 1 min bis 1 h und insbesondere 1 min bis 45 min haben. Die Ruhezeit dient zum Verlauf und zur Entgasung der Grundierungsschicht(en) 1 und zum Verdunsten von flüchtigen Bestandteilen wie Wasser und Lösemittel. Die Ruhezeit kann durch die Anwendung erhöhter Temperaturen bis 90 °C und/oder durch eine reduzierte Luftfeuchte < 10g Wasser/kg Luft, insbesondere < 8g Wasser/kg Luft, unterstützt und/oder verkürzt werden, sofern hierbei keine .Schädigungen oder Veränderungen der Grundierungsschicht(en) 1 eintreten, etwa eine vorzeitige vollständige Vernetzung.

Die weiterem in Verlauf des erfindungsgemäßen Verfahrens applizierten Beschichtungsstoffe (Wasserbasislack 2, Wasserbasislack 3 und Pulverklarlack-Slurry 4) können in der gleichen Weise getrocknet werden.

Die Grundierungsschicht(en) 1 kann oder können auch vollständig gehärtet werden, wodurch mindestens eine, insbesondere eine, Grundierung 1, vorzugsweise eine Elektrotauchlackierung 1, resultiert.

Die thermische Härtung weist keine methodischen Besonderheiten auf, sondern erfolgt nach den üblichen und bekannten Methoden wie Erhitzen in einem Umluftofen oder Bestrahlen mit nahem Infrarot (NIR) oder Infrarot (IR). Hierbei kann die thermische Härtung auch stufenweise erfolgen. Vorteilhafterweise erfolgt die thermische Härtung bei einer Temperatur von 50 bis 100 °C, besonders bevorzugt 80 bis 100 °C und insbesondere 90 bis 100 ° C während einer Zeit von 1 min bis zu 2 h, besonders bevorzugt 2 min bis zu 1 h und insbesondere 3 min bis 30 min, wenn die Substrate thermisch nicht stark belastbar sind. Werden Substrate verwendet, welche thermisch stark belastbar sind, kann die thermische Vernetzung auch bei Temperaturen oberhalb 100 °C durchgeführt werden. Im allgemeinen empfiehlt es sich, hierbei Temperaturen von 180 °C, vorzugsweise 160 °C und insbesondere 155 °C nicht zu überschreiten.

Im Verfahrenschritt (II) des erfindungsgemäßen Verfahrens wird mindestens ein, insbesondere ein, Wasserbasislack 2 auf die äußere Oberfläche der Grundierungsschicht(en) 1**,** insbesondere der Elektrotauchlackschicht(en) 1, oder die äußere Oberfläche der Grundierung(en) 1, insbesondere der Elektrotauchlackierung(en) 1, appliziert.

Die Applikation des Wasserbasislacke 2 kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder - anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Die Applikationen kann bei Temperaturen von max. 70 bis 80 °C durchgeführt werden, so dass geeignete Applikationsviskositäten erreicht werden, ohne dass bei der kurzzeitig einwirkenden thermischen Belastung eine Veränderung oder Schädigungen des Wasserbasislacks und seines gegebenenfalls wieder aufzubereitenden Overspray eintreten. So kann das Heißspritzen so ausgestaltet sein, dass der Wasserbasislack 2 nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Wasserbasislack 2 selbst, betrieben wird.

Ist ein besonderer Vorteil des erfindungsgemäßen Verfahrens, dass diese Applikationsverfahren auch bei der Applikation der weiteren Beschichtungsstoffe (Wasserbasislack 2 und Pulverklarlack-Slurry 4) mit Vorteil angewandt werden können.

Anschließend wird oder werden die resultierende(n) Wasserbasislackschicht(en)2 getrocknet, ohne sie vollständig zu härten.

Für das erfindungsgemäße Verfahren ist es wesentlich, dass der Wasserbasislack 2 als Bindemittel mindestens ein, insbesondere ein, dispergiertes Pfropfmischpolymerisat (A/B) enthält, dessen Partikel aus einem hydrophoben Kern (A) aus mindestens einem einpolymerisierten olefinisch ungesättigten Monomeren (a) und einer hydrophilen Schale (B), die mindestens ein hydrophiles Polyurethan (b) enthält oder hieraus besteht, aufgebaut sind und durch die radikalische (Co)Polymerisation der Monomeren (a) in der Gegenwart mindestens eines hydrophilen Polyurethans (b 1) hergestellt werden.

Für das hydrophile Polyurethan (b 1) ist es wesentlich, dass es mindestens eine olefinisch ungesättigte Gruppe, ausgewählt aus der Gruppe bestehend aus
- lateralen und terminalen Ethenylarylengruppen;
- lateralen olefinisch ungesättigten Gruppen, die an cycloaliphatische Gruppen gebunden sind, die Glieder der Polymerhauptketten darstellen;
- lateralen cycloolefinisch ungesättigten Gruppen, die Glieder der Polymerhauptketten darstellen;
- terminalen olefinisch ungesättigten Gruppen, die an cycloaliphatische Gruppen gebunden sind, die die Endgruppen der Polymerhauptketten darstellen;
- terminalen cycloolefinisch ungesättigten Gruppen, die die Endgruppen der Polymerhauptketten darstellen; und
- lateralen und terminalen, olefinisch ungesättigten Gruppen, die durch Umsetzung von Polyurethanen mit Anhydriden von alpha,beta-ungesättigten Carbonsäuren erhalten werden;
enthält.

Im Rahmen der vorliegenden Erfindung ist unter der Eigenschaft hydrophil die konstitutionelle Eigenschaft eines Moleküls oder einer funktionellen Gruppe zu verstehen, in die wässrige Phase einzudringen oder darin zu verbleiben. Demgemäß ist im Rahmen der vorliegenden Erfindung unter der Eigenschaft hydrophob die konstitutionelle Eigenschaft eines Moleküls oder einer funktionellen Gruppe zu verstehen, sich gegenüber Wasser exophil zu verhalten, d. h., sie zeigen die Tendenz, in Wasser nicht einzudringen oder die wässrige Phase zu verlassen. Ergänzend wird auf Römpp Lexikon Lacke und Druckfarben, Georg Thieme Verlag, Stuttgart, New York, 1998, »Hydrophilie«, »Hydrophobie«, Seiten 294 und 295, mit verwiesen.

Vorzugsweise werden Ethenylarylengruppen der allgemeinen Formel I verwendet:

**CH**_{**2**}**=C(R)-A-** (I),

worin die Variable A für einen substituierten oder unsubstituierten C₆-C₂₀₋Arylenrest und die Variable R für ein Wasserstoffatom, ein Halogenatom, eine Nitrilgruppe, einen substituierten oder unsubstituierten Alkyl-, Cycloalkyl-, Alkylcycloalkyl-, Cycloalkylalkyl-, Aryl-, Alkylaryl-, Cycloalkylaryl-Arylalkyl- oder Arylcycloalkylrest stehen.

Beispiele geeigneter Alkylreste R sind Methyl, Ethyl, Propyl, Isopropyl, n-Butyl, iso-Butyl, tert.-Butyl, Amyl, Hexyl, Heptyl, Octyl, 2-Ethylhexyl, Isooctyl, Nonyl, Decyl, Undecyl, Dodecyl, Tridecyl, Tetradecyl, Pentadecyl, Hexadecyl, Heptadecyl, Octadecyl, Nonadecyl oder Eicosanyl.

Beispiele geeigneter Cycloalkylreste R sind Cyclobutyl, Cyclopentyl, Cyclobutyl, Cyclopentyl, Cyclohexyl, Bicyclo[2.2.1]heptyl, Bicyclo[3.2.1]octyl oder Tricyclodecyl.

Beispiele geeigneter Alkylcycloalkylreste R sind Methylencyclohexan, Ethylencyclohexan oder Propan-1,3-diyl-cyclohexan.

Beispiele geeigneter Cycloalkylalkylreste R sind 2-, 3- oder 4-Methyl-,-Ethyl-, -Propyl- oder-Butylcyclohex-1-yl.

Beispiele geeigneter Arylreste R sind Phenyl, Naphthyl oder Biphenylyl.

Beispiele geeigneter Alkylarylreste R sind Benzyl-, Ethylen- oder Propan-1,3-diyl-benzol.

Beispiele geeigneter Cycloalkylarylreste R. sind 2-, 3-, oder 4-Phenylcyclohex-1-yl.

Beispiele geeigneter Arylalkylreste R sind 2-, 3- oder 4-Methyl-, -Ethyl-,-Propyl- oder -Butylphen-1-yl.

Beispiele geeigneter Arylcycloalkylreste R sind 2-, 3- oder 4-Cyclohexylphen-1-yl.

Von diesen Resten R sind Wasserstoffatome und Alkylgruppen R, insbesondere Methylgruppen, von Vorteil und werden deshalb erfindungsgemäß bevorzugt verwendet. Von besonderem Vorteil hinsichtlich der Pfropfaktivität der Ethenylgruppe sind Methylgruppen, weswegen sie erfindungsgemäß ganz besonders bevorzugt verwendet werden.

Die vorstehend beschriebenen Reste A und R, sofern es sich nicht um Wasserstoffatome, Halogenatome oder Nitrilgruppen handelt, können substituiert sein. Hierzu können elektronenziehende oder elektronenschiebende Atome oder organische Reste verwendet werden.

Beispiele geeigneter Substituenten sind Halogenatome, insbesondere Chlor und Fluor, Nitrilgruppen, Nitrogruppen, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste, inclusive der vorstehend beispielhaft genannten, insbesondere tert.-Butyl; Aryloxy-, Alkyloxy- und Cycloalkyloxyreste, insbesondere Phenoxy, Naphthoxy, Methoxy, Ethoxy, Propxy, Butyloxy oder Cyclohexyloxy; Arylthio-, Alkylthio- und Cycloalkylthioreste, insbesondere Phenylthio, Naphthylthio, Methylthio, Ethylthio, Propylthio, Butylthio oder Cyclohexylthio; und/ tertiäre Aminogruppen, insbesondere N,N-Dimethylamino, N,N-Diethylamino, N,N-Dipropylamino, N,N-Diphenylamino, N,N-Dicyclohexylamino, N-Cyclohexyl-N-methylamino oder N-Ethyl-N-methylamino. Die Auswahl geeigneter Substituenten ist so zu treffen, daß keine unerwünschte Wechselwirkung wie etwa eine Salzbildung oder eine Vernetzung mit den im Polyurethan (b) und im Pfropfmischpolymerisat (A/B) vorhandenen hydrophilen Gruppen eintreten kann. Der Fachmann kann daher geeignete Substituenten in einfacher Weise auswählen.

Erfindungsgemäß sind unsubstituierte Reste A und R von Vorteil und werden deshalb besonders bevorzugt verwendet.

Vorzugsweise sind die Ethenylarylengruppen über einen zweibindigen oder dreibindigen, mindestens eine Urethan- und/oder Hamstoffgruppe enthaltenden verknüpfenden Rest mit der Polyurethanhauptkette des Polyurethans (b) verbunden.

Bevorzugt enthalten die verknüpfenden Reste mindestens eine der zweibindigen oder dreibindigen Gruppen der allgemeinen Formeln IIa bis IIc:

**-X-NH-C(O)-O-** (IIa),

**-X-NH-C(O)-NH-** (IIb)

oder

**-X-NH-C(O)-N<** (IIc),

worin X einen zweibindigen organischen Rest bezeichnet.

Vorzugsweise steht die Variable X für einen zweibindigen organischen Rest, der sich von den folgenden Verbindungen ableitet:
(i) Substituierte und unsubstituierte, kein oder mindestens ein Heteroatom in der Kette und/oder im Ring enthaltende, lineare oder verzweigte Alkane, Alkene, Cycloalkane, Cycloalkene, Alkylcycloalkane, Alkylcycloalkene, Alkenylcycloalkane oder Alkenylcycloalkene;
(ii) substituierte und unsubstituierte Aromaten oder Heteroamaten; sowie
(iii) Alkyl-, Alkenyl-, Cycloalkyl-, Cycloalkenyl-, Alkylcyloalkyl-, Alkylcycloalkenyl-, Alkenylcycloalkyl- oder Alkenylcycloalkenyl-substitiuierte Aromaten oder Heteroaromaten, deren Substituenten substituiert oder unsubstituiert sind und kein oder mindestens ein Heteroatom in ihrer Kette und/oder ihrem Ring enthalten;

Beispiele geeigneter Heteroatome sind Sauerstoff-, Stickstoff-, Bor-, Silizium-, Schwefel- oder Phosphoratome.

Beispiele geeigneter Substituenten sind die vorstehend genannten Substituenten, für deren Auswahl das vorstehend Gesagte zu beachten ist.

Beispiele geeigneter Aromaten sind Benzol und Naphthalin.

Beispiele geeigneter Heteroaromaten sind Thiophen, Pyridin oder Triazin.

Beispiele geeigneter Alkane sind verzweigte mit oder unverzweigte Alkane vorzugsweise mit 1 bis 10, insbesondere 3 bis 6 C-Atomen im Molekül wie Methan Ethan, Propan, Butan, Isobutan, Pentan, Neopentan, Hexan, Heptan, Octan, Isooctan, Nonan, oder Dececan.

Beispiele geeigneter Alkene sind Ethylen und Propylen.

Beispiele geeigneter Cycloalkane sind Cyclopentan und Cyclohexan.

Beispiele geeigneter Cycloalkene sind Cyclopenten und Cyclohexen.

Beispiele geeigneter Alkylcycloalkane sind Methylcyclopentan und Methylcyclohexan.

Beispiele geeigneter Alkylcycloalkene sind Methylcyclopenten und Methylcyclohexen.

Beispiele geeigneter Alkenylcycloalkane sind Allyl- und Vinylcyclopentan und Allyl- und Vinylcyclohexan.

Beispiele geeigneter Alkenylcycloalkene sind Vinylcyclopenten und Vinylcyclohexen.

Beispiele geeigneter Alkyl-, Alkenyl-, Cycloalkyl-, Cycloalkenyl-, Alkylcyloalkyl-, Alkylcycloalkenyl-, Alkenylcycloalkyl- oder Alkenylcycloalkenylsubstituenten sind Methyl, Ethyl, Propyl, Isopropyl, n-Butyl, sec.-Butyl, tert.-Butyl, Vinyl, Allyl, Cyclohexyl, Cyclohexenyl, 4-Methylcyclohexyl, 4-Methylcyclohexenyl, 3-Allylcyclohexenyl oder 4-Vinylcyclohexenyl.

Vorzugsweise leiten sich die Reste X von organischen Verbindungen ab, die als solche unsubstituiert sind oder deren Substituenten unsubstituiert sind.

Besonders bevorzugt sind die Reste X Alkandiylreste mit 3 bis 6 Kohlenstoffatomen im Molekül, insbesondere der Alkandiylrest -(CH₃)₂-.

Vorzugsweise handelt es sich bei den olefinisch ungesättigten Gruppen, die an die cycloaliphatischen Gruppen gebunden sind, um (Meth)Acrylat-, Ethacrylat-, Crotonat-, Cinnamat-, Vinylether-, Vinylester-, Vinyl-, Dicyclopentadienyl-, Norbornenyl-, Isoprenyl-, Isopropenyl-, Allyl- und/oder Butenylgruppen; Dicyclopentadienyl-, Norbornenyl-, Isoprenyl-, Isopropenyl-, Allyl- oder Butenylethergruppen und/oder Dicyclopentadienyl-, Norbomenyl-, Isoprenyl-, Isopropenyl-, Allyl- und/oder Butenylestergruppen, insbesondere Vinylgruppen.

Vorzugsweise leiten sich die cycloaliphatischen Gruppen von Cycloaliphaten mit 4 bis 12 Kohlenstoffatomen im Molekül und die cycloolefinischen Gruppen von Cycloolefinen mit 4 bis 12 Kohlenstoffatomen im Molekül ab.

Bevorzugt leiten die cycloaliphatischen Gruppen von Cyclobutan, Cyclopentan, Cyclohexan, Cycloheptan, Cycloctan, Norbornan, Bicyclo[2.2.2]octan, Decalin, Hydroindan, Dicylcopenteri, Tricyclodecan oder Adamantan und die cycloolefinischen Gruppen von Cyclopenten, Cyclohexen, Cyclohepten, Cycloocten, Norbornen, Bicyclo[2.2.2]octen oder Dicylclopenten ab.

Vorzugsweise werden die Anhydride der alpha,beta-ungesättigten Carbonsäuren aus der Gruppe, bestehend aus Acrylsäure-, Methacrylsäure-, Ethacrylsäure und Zimtsäureanhydrid, ausgewählt. Insbesondere wird Methacrylsäureanhydrid verwendet.

Von den vorstehend beschriebenen olefinisch ungesättigten Gruppen werden die Ethenylarylengruppen besonders bevorzugt verwendet.

Die Herstellung der hydrophilen Polyurethane (b 1) weist keine methodischen Besonderheiten auf, sondern wird im Detail in den deutschen Patentanmeldungen
- DE 199 48 004 A 1, Seite 4, Zeile 19, bis Seite 10, Zeile 24, und Seite 19, Zeile 42, bis Seite 20, Zeile 7;
- DE 199 53 445 A 1, Seite 4, Zeile 34, bis Seite 11, Zeile 56, und Seite 18, Zeile 52, bis Seite 19, Zeile 34;
- DE 100 39 262 A 1, Seite 4, Absatz [0027], bis Seite 9, Absatz [0101], und Seiten 17 und 18, Absatz [0193]; sowie
- DE 199 53 446 A 1, Spalte 3, Zeile 20, bis Spalte 11, Zeile 38, und Spalte 18, Zeile 48, bis Spalte 19, Zeile 23.

Für die Herstellung der Pfropfmischpolymerisate (AlB) mindestens ein olefinisch ungesättigtes Monomer (a) in der Gegenwart mindestens eines der vorstehend beschriebenen hydrophilen Polyurethane (b 1) radikalisch copolymerisiert. Die radikalische (Co)Polymerisation der olefinisch ungesättigten Monomere (a) in der Gegenwart eines hydrophilen Polyurethans (b 1) weist keine methodischen Besonderheiten auf. So werden die geeigneten Monomere (a) und die Verfahren der radikalischen (Co)Polymerisation ebenfalls im Detail in den deutschen Patentanmeldungen
- DE 199 48 004 A 1, Seite 10, Zeilen 27 bis 41, Seite 10, Zeile 48, bis Seite 13, Zeile 48, und Seite 20, Zeilen 9 bis 21;
- DE 199 53 445 A 1, Seite 12, Zeilen 6 bis 10, Seite 12, Zeile 21, bis Seite 14, Zeile 29, und Seite 19, Zeilen 36 bis 49;
- DE 100 39 262 A 1, Seite 9, Absätze [0107] und [0108], Seite 9, Absatz [0110], bis Seite 12, Absatz [0129], und Seite 18, Absatz [0194]; sowie
- DE 199 53 446 A 1, Spalte 11, Zeile 50, bis Spalte 16, Zeile 46, und Spalte 19, Zeile 25, bis Spalte 20, Zeile 32;
beschrieben.

Außer mindestens einem der vorstehend beschriebenen Pfropfmischpolymerisate (A/B) enthält der Wasserbasislack mindestens einen weiteren der Bestandteile, die im Detail in den deutschen Patentanmeldungen
- DE 199 48 004 A 1, Seite 13, Zeile 67, bis Seite 17, Zeile 8, und Seite 20, Zeilen 51, bis Seite 22, Zeile 11;
- DE 199 53 445 A 1, Seite 14, Zeile 48, bis Seite 16, Zeile 17, und Seite 20, Zeile 12, bis Seite 21, Zeile 62;
- DE 100 39 262 A 1, Seite 12, Absatz [0134], bis Seite 14, Absatz [0135] und Seite 18, Absatz [0198], bis Seite 20, Absatz [0208]; sowie
- DE 199 53 446 A 1, Spalte 17, Zeile 15, bis Spalte 18, Zeile 19;
beschrieben werden, in den dort angegebenen Mengen.

Die Herstellung des Wasserbasislacks 2 weist keine Besonderheiten auf, sondern erfolgt in üblicher und bekannter Weise durch Vermischen der vorstehend beschriebenen Bestandteile in geeigneten Mischaggregaten wie Rührkessel, Dissolver oder Extruder.

Bei dem erfindungsgemäßen Verfahren wird im Verfahrenschritt (III) mindestens ein, insbesondere ein Wasserbasislack 3 auf die äußere Oberfläche der getrockneten Wasserbasislackschicht(en) 2 appliziert, wonach die resultierende(n) Wasserbasislackschicht(en) 3 getrocknet werden kann oder können, ohne sie dabei vollständig zu härten. Für die Applikation und die Trocknung werden vorzugsweise die vorstehend beschriebenen Methoden angewandt.

Als Wasserbasislacke 3 können alle üblichen und bekannten Wasserbasislacke inklusive der vorstehend beschriebenen Wasserbasislacke 2 verwendet werden. Beispiele geeigneter in üblicher und bekannter Wasserbasislacke 3, Wasserbasislacke 2 ausgenommen, werden in den Druckschriften EP 0 089 497 A 1, EP 0 256 540 A 1, EP 0 260 447 A 1, EP 0 297 576 A 1, WO 96/12747, EP 0 523 610 A 1, EP 0 228 003 A 1, EP0397806A 1, EP0574417A1, EP 0 531 510A1, EP0581 211 A 1,EP0708788A1,EP0593454A1,DE4328092A1,EP0299148 A 1, EP0394737A1, EP0590484A1, EP0234362A1, EP 0 234 361 A 1, EP 0 543 817 A 1, WO 95/14721, EP 0 521 928 A 1, EP 0 522 420 A 1, EP 0 522 419 A 1, EP 0 649 865 A 1, EP 0 536 712 A 1, EP 0 596 460 A 1, E P 0 596 461 A 1, E P 0 584 818 A 1, E P 0 669 356 A 1, E P 0 634 431 A 1, EP 0 678 536 A 1, E P 0 354 261 A 1, E P 0 424 705 A 1, WO 97/49745, WO 97/49747, EP 817 684 A 1 beschrieben.

Bei dem erfindungsgemäßen Verfahren wird im Verfahrenschritt (IV) mindestens eine, insbesondere eine, strukturviskose Pulverklarlack-Sluny 4 auf die äußere Oberfläche der getrockneten Wasserbasislackschicht(en) 3 appliziert, wonach man die resultierende(n) Klarlackschicht(en) 4 gegebenenfalls trocknet. Für die Applikation und die Trocknung werden vorzugsweise die vorstehend beschriebenen Methoden angewandt.

Bei der strukturviskosen Pulverklarlack-Slurry 4 handelt es sich um eine Slurry der zweiten Generation.

Die Pulverklarlack-Sluny 4 ist herstellbar durch
(α) ein Sekundärdispersionsverfahren durch Emulgieren einer organischen Lösung, enthaltend Bindemittel und Vemetzer, wodurch eine Emulsion vom Typ Öl-in-Wasser resultiert, Entfernen des organischen Lösemittels oder der organische Lösemittel und teilweisen oder völligen Ersatz des entfernten Lösemittelvolumens durch Wasser, wodurch die Pulverklarlack- slurry mit sphärischen dimensionsstabilen Partikeln resultiert; oder
β) ein Schmelzeemulgierverfahren, bei dem man mindestens einen Bestandteil, vorzugsweise alle Bestandteile, der Pulverklarlack-Slurry in flüssigem, insbesondere geschmolzenem, Zustand in einem wässrigen Medium emulgiert, wodurch sich eine wässrige Emulsion flüssiger Partikel bildet, und die Emulsion abkühlen lässt, sodass sich eine wässrige Suspension dimensionsstabiler Partikel bildet.

Vorzugsweise wird die Pulverklarlack-Slurry 4 mit Hilfe des Sekundärdispersionsverfahrens hergestellt.

Vorzugsweise ist die Pulverklarlack-Sluny 4 ist frei von organischen Löserrütteln. Im Rahmen der vorliegenden Erfindung bedeutet dies, dass sie einen Restgehalt an organischen Lösemitteln von < 1 Gew.-%, bevorzugt < 0,5 Gew.-% und besonders bevorzugt < 0,2 Gew.-% hat. Von ganz besonderem Vorteil ist es, wenn der Restgehalt unterhalb der gaschromatographischen Nachweisgrenze liegt.

Außerdem ist die Pulverklarlack-Sluny 4 in diesem Sinne vorzugsweise frei von externen Emulgatoren.

Vorzugsweise haben die dimensionsstabilen Partikel der Pulverklarlack-Slurry 4 eine mittlere Teilchengröße von 0,8 bis 20 µm und eine maximale Teilchengröße von 30 µm.

Die Strukturviskosität der Pulverklarlack-Slurry 4 wird in üblicher und bekannter Weise durch rheologiesteuernde Hilfsmittel, insbesondere durch übliche und bekannte ionische Verdicker und nicht-ionische Assoziativverdicker eingestellt.

Besonders gut geeignete. Pulverklarlack-Slurries 4, die durch das Sekundärdispersionsverfahren herstellbar sind, sind aus den deutschen Patentanmeldungen
- DE 198 41 842 A 1, Seite 3, Zeile 3, bis Seite 5, Zeile 61 und Seite 7, Zeile 1, bis Seite 8, Zeile 4;
- DE 100 01 442 A 1, Spalte 3, Absatz [0014], bis Spalte 9, Absatz [0071], und Spalte 11, Absatz [0080], bis Spalte 12, Absatz [0090),
- DE 100 55 464 A 1, Seite 2, Absatz [0008], bis Seite 7, Absatz [0072], und Seite 10, Absätze [0100] bis [0103] i. V. m. den Absätzen [0106] und [0107];
- DE 100 27 292 A 1, Seite 2, Absatz [0013], bis Seite 12, Absatz [0099], i. V. m. Seite 12, Absätze [0100] und [0101], und Seite 12, Absatz [0103];
und dem deutschen Patent
- DE 100 27 290 C 2, Seite2, Absatz [0012], bis Seite 11, [0074], i. V. m. Seite 11, Absätze [0075] und [0076] und Absatz [0078];
bekannt.

Besonders gut geeignete Pulverklarlack-Slurries 4, die durch das Schmelzeemulgierverfahren herstellbar sind, sind aus den deutschen Patentanmeldungen und Patenten
- DE 100 27 292 A 1, Seite 2, Absatz [0013], bis Seite 12, Absatz [0099], i. V. m. Seite 12, Absätze [0100] und [0101], und Seite 12, Absatz [0104];
- DE 100 27 290 C 2, Seite2, Absatz [0012], bis Seite 11, [0074], i. V. m. Seite 11, Absätze [0075] und [0076] und Absatz [0079];
- DE 100 06 673 C 1, Spalte 3, Zeile 10, bis Spalte 7, Zeilen 19, Spalte 7, Zeile 49, bis Spalte 9,Zeile 54, und Spalte 14,Zeile 24, bis Spalte 15, Zeile 23; und
- DE 101 26 651 A 1, Seite 3, Absatz [0015], bis Seite 14, Absatz [0130], Seite 16, Absatz [0155], bis Seite 17, [0173], und Seite 18, Absatz [0194] bis Seite 19, Absatz [0204];
bekannt.

Im Verfahrenschritt (V) des erfindungsgemäßen Verfahrens erfolgt die gemeinsame Härtung der getrockneten Klarlackschicht(en) 4, der gegebenenfalls getrockneten Wasserbasislackschicht(en) 3 und der gegebenenfalls getrockneten Wasserbasislackschicht(en) 2 sowie gegebenenfalls der gegebenenfalls getrockneten Grundierungsschicht(en) 1, wodurch die Mehrschichtlackierung aus mindestens einer, insbesondere einer, Grundierung 1, mindestens einer, insbesondere einer, Wasserbasislackierung oder Funktions- oder Füllerlackierung 2, mindestens einer, insbesondere einer, Wasserbasislackierung 3 und mindestens einer, insbesondere einer, Klarlackierung 4 resultiert.

Die Härtung erfolgt thermisch. Vorzugsweise werden die vorstehend beschriebenen Methoden angewandt. Die thermische Härtung kann auch noch durch die Bestrahlung mit aktinischer Strahlung ergänzt werden, was auch als Dual-Cure-Härtung bezeichnet wird. Unter aktinischer Strahlung ist elektromagnetische Strahlung, wie nahes Infrarot (NIR), sichtbares Licht, UV-Strahlung, Röntgenstrahlung und Gammastrahlung, insbesondere UV-Strahlung, und Korpuskularstrahlung, wie Elektronenstrahlung, Betastrahlung, Protonenstrahlung, Neutronenstrahlung und Alphastrahlung, insbesondere Elektronenstrahlung, zu verstehen.

Darüber hinaus können die Klarlackierungen 4 noch zusätzlich mit mindestens einer weiteren Klarlackierung, beispielsweise einer organisch modifizierten Keramikschicht, beschichtet sein, wodurch die Kratzfestigkeit der resultierenden Mehrschichtlackierung signifikant verbessert werden kann.

Vorzugsweise liegen in der Mehrschichtlackierung die Schichtdicken der Grundierung 1 bei 10 bis 100, vorzugsweise 10 bis 80, besonders bevorzugt 10 bis 50 und insbesondere 10 bis 30 µm; der Wasserbasislackierungen 2 und 3 bei 5 bis 40, vorzugsweise 5 bis 30, besonders bevorzugt 5 bis 25 und insbesondere 10 bis 20 µm und der Klarlackierung 4 bei 10 bis 100, vorzugsweise 15 bis 80, besonders bevorzugt 20 bis 70 und insbesondere 25 bis 60 µm.

Die Mehrschichtlackierungen weisen ein hervorragendes Eigenschaftsprofil auf, das hinsichtlich der Mechanik, Optik, Korrosionsbeständigkeit und Haftung sehr gut ausgewogen ist. So weisen die Mehrschichtlackierungen die vom Markt geforderte hohe optische Qualität und Zwischenschichthaftung auf und werfen keine Probleme wie mangelnde Schwitzwasserbeständigkeit der Füllerschichten, Rissbildung .(mudcracking) in den Basislackierungen oder Verlaufsstörungen oder Oberflächenstrukturen in den Klarlackierungen auf. Insgesamt besitzen sie die vom Markt geforderte Automobilqualität.

Insbesondere weisen die Mehrschichtlackierungen einen hervorragenden Metallic-Effekt, einen hervorragenden D.O.I. (distinctiveness of the reflected image) und eine hervorragende Oberflächenglätte, auf. Sie sind witterungsstabil, resistent gegenüber Chemikalien und Vogelkot und kratzfest und zeigen ein sehr gutes Reflow-Verhalten.

Insbesondere ist die Zwischenschichthaftung zwischen der Wasserbasislackierung 3 und der Klarlackierung 4 im Vergleich zum Stand der Technik so weit verbessert, dass auch nach der Belastung mit Steinschlag und/oder Kondenswasser keine Klarlackdelamination bei der nachträglichen Belastung der Mehrschichtlackierung mit Dampfstrahlen und/oder heißen Wasserstrahlen, wie sie beispielsweise bei der Reinigung von Automobilen stattfindet, mehr eintritt.

Demzufolge weisen auch die mit Hilfe des erfindungsgemäßen Verfahrens beschichteten Substrate besondere Vorteile wie eine längere Gebrauchsdauer, einen besseren ästhetischen Eindruck beim Betrachter und eine bessere technologische Verwertbarkeit auf, was sie gerade in der Automobilserienlackierung wirtschaftlich besonders attraktiv macht.

### Beispiele und Vergleichsversuche

### Herstellbeispiel 1

### Die Herstellung eines Ausgangsprodukts zur Einführung von Ethenylarylengruppen in ein Polyurethan (b 1)

In einem Reaktionsgefäß, ausgerüstet mit Rührer, Innenthermometer, Rückflusskühler und elektrischer Heizung, wurden 1050 Gewichtsteile Methylethylketon, 450 Gewichtsteile N-Methylpyrrolidon und 496,2 Gewichtsteile Monoethanolamin bei 20 °C vorgelegt. Zu dieser Mischung wurden während eineinhalb Stunden 1030,8 Gewichtsteile 1-(1-Isocyanato-1-methylethyl)-3-(1-methylethenyl)-benzol (TMI® der Firma CYTEC) zugetropft, so dass die Reaktionstemperatur 40 °C nicht überschritt. Die resultierende Reaktionsmischung wurde so lange gerührt, bis keine freien Isocyanatgruppen mehr nachweisbar waren. Danach wurde sie mit 200 ppm Hydrochinon stabilisiert. Der Feststoffgehalt der Reaktionsmischung lag bei 50 Gew.-%.

### Herstellbeispiel 2

### Die Herstellung eines Polyurethans (b 1)

In einem Reaktionsgefäß, ausgerüstet mit Rührer, Innenthermometer, Rückflußkühler und elektrischer Heizung, wurden 1061 Gewichtsteile eines linearen Polyesterpolyols (hergestellt aus dimerisierter Fettsäure (Pripol®1013), Isophthalsäure und Hexan-1,6-diol) mit einer Hydroxylzahl von 80 und einem zahlenmittleren Molekulargewicht von 1.400 Dalton und 171,3 Gewichtsteile Dimethylolpropionsäure und 53,5 Gewichtsteile Trimethylolpropan in 850,9 Gewichtsteilen Methylethylketon und 175 Gewichtsteilen N-Methylpyrrolidon gelöst. Zu der resultierenden Lösung wurden bei 45 °C 709,4 Gewichtsteile lsophorondiisocyanat hinzugegeben. Nach dem Abklingen der exothermen Reaktion wurde die Reaktionsmischung unter Rühren langsam auf 80 °C erwärmt. Es wurde bei dieser Temperatur weiter gerührt, bis der Isocyanatgehalt weitgehend konstant war. Danach wurde die Reaktionsmischung auf 65 °C abgekühlt, und es wurden 209,3 Gewichtsteile des Ausgangsprodukts gemäß Herstellbeispiel 1 hinzugegeben. Die resultierende Reaktionsmischung wurde so lange bei 65 °C gerührt, bis der Isocyanatgehalt 1,25 Gew.-% betrug und konstant war. Die Reaktionsmischung wurde auf 60 °C abgekühlt, und es wurden 69 Gewichtsteile Diethanolamin hinzu gegeben. Nach dem Abklingen der exothermen Reaktion wurde weiter bei 60 °C gerührt, bis keine freien Isocyanatgruppen mehr nachweisbar waren. Das resultierende gelöste Polyurethan (b 1) wurde mit 253 Gewichtsteilen Methoxypropanol und 97,9 Gewichtsteilen Triethylamin versetzt. 30 Minuten nach der Aminzugabe wurden 3715 Gewichtsteile deionisiertes Wasser unter Rühren hinzugegeben wurden. Aus der resultierenden Dispersion wurde das Methylethylketon bei 60 °C unter Vakuum abdestilliert. Hiernach wurden eventuelle Lösemittel- und Wasserverluste ausgeglichen. Die so erhaltene Dispersion des erfindungsgemäßen Polyurethans (b 1) wies einen Feststoffgehalt von 35,0 Gew.-% (1h bei 130 °C) und einen pH-Wert 7,1 auf.

### Herstellbeispiel 3

### Die Herstellung der Primärdispersion eines Pfropfmischpolymerisats (AlB)

1.392,9 Gewichtsteile der Polyurethandispersion (b 1) gemäß Herstellbeispiel 2 wurden mit 996,6 Gewichtsteilen deionisiertem Wasser verdünnt und auf 85 °C erhitzt. Bei dieser Temperatur wurde der Dispersion unter Rühren ein Gemisch aus 139,4 Gewichtsteilen Styrol, 195,0 Gewichtsteilen Methylmethacrylat, 50,2 Gewichtsteilen Hydroxybutylmethacrylat, 43,9 Gewichtsteilen n-Butylacrylat und 50,2 Gewichtsteilen Hydroxyethylmethacrylat während 3,5 h gleichmäßig zugegeben. Mit Beginn der Zugabe der Monomerenmischung wurde eine Lösung von 7,3 Gewichtsteilen tert.-Butylperoxyethylhexanoat in 115,3 Gewichtsteilen Methoxypropanol innerhalb von 3,75 h zugegeben. Die resultierende Reaktionsmischung wurde bei 85 °C so lange weiter gerührt, bis alle Monomeren abreagiert waren. Danach wurde die Dispersion auf 40 °C abgekühlt und über ein 30 µm Siebgewebe und 1 µm Plattenfilter filtriert. Die resultierende Primärdispersion des Pfropfmischpolymerisats wies eine sehr gute Lagerstabilität auf. Ihr Feststoffgehalt lag bei 32,0 Gew.-% (1h bei 130 °C) und ihr pH-Wert bei 7,1.

### Beispiele 1 und 2 und Vergleichsversuche V 1 und V 2

### Die Herstellung der Wasserbasislacke 2.1 und 2. 2 (Beispiele 1 und 2) und der Wasserbasislacke V 1 und V 2 (Vergleichsversuche V 1 und V 2)

### Vergleichsversuch V 1, Wasserbasislack V 1

(i) Gemäß den in Tabelle 1 angegebenen Gewichtsteilen wurde die in der EP 0 788 523 B2 unter Punkt 1.1 beschriebene wässrige Polyurethandispersion mit einem handelsüblichen Verlaufsmittel auf Basis eines wasserverdünnbaren Acrylatharzes, mit einer Lösung eines handelsüblichen Antischaummittels auf Basis eines ungesättigten verzweigten Diols, gelöst in Butylglykol, mit Aerosil ® R972und R805, Talkum, einem handelsüblichen Flammruß, mit Sicomix-Schwarz, Titandioxid, Füllstoff auf Basis eines Aluminiumsilikates und mit entionisiertem Wasser versetzt und angepastet. Diese Mischung wurde in eine diskontinuierliche Laborsandmühle gefüllt und dispergiert, bis eine Feinheit von max. 10 µm im Grindometer nach Hegmann erreicht war.
(ii) Aus dieser Dispergiermischung wurde dann unter Zusatz von weiterer Polyurethanharzdispersion, einem methanol-/buthanolmischveretherten Melaminharz 1 in Butylglykol (Cymel ® 1133 der Firma Cytec Specialty Resins), einem handelsüblichen Sulfonsäurekatalysator, einem Benetzungsadditiv auf Basis von Silikontensiden, eines wasserverdünnten handelsüblichen Polyurethanverdickers und entionisiertem Wasser der wässrige Vergleichslack hergestellt, der mit N,N-Dimethylethanolamin auf einem pH-Wert von 7,5 bis 8,0 und mit entionisiertem Wasser auf eine Spritzviskosität von 33 sec (DIN 4) eingestellt wurde.

Die Gewichtsanteile ergeben sich aus der Tabelle 1.

### Vergleichsversuch V 2, Wasserbasislack V 2

Der Vergleichsversuch V 1 wurde wiederholt, nur dass zusätzlich ein methanolverethertes Melamin 2 (Cymel ® 303 der Firma Cytec Specialty Resins). Die Gewichtsanteile ergeben sich aus der Tabelle 1.

### Beispiel 1, Wasserbasislack 2.1

Der Vergleichsversuch V 1 wurde wiederholt, nur dass an Stelle der Polyurethandispersion gemäß EP 0 788 523 B2 bei der Vervollständigung der Dispergiermischung gemäß Stufe (ii) das Pfropfmischpolymerisat (A/B) gemäß Herstellbeispiel 3 verwendet wurde. Die Gewichtsanteile ergeben sich aus der Tabelle 1.

### Beispiel 2,Wasserbasislack 2.2

Beispiel 1 wurde wiederholt, nur dass an Stelle der Polyurethandispersion gemäß EP 0 788 523 B2 bei Anpastung der Dispergiermischung gemäß Stufe (i) als Anreibemittel die Polyurethandispersion gemäß der europäischen Patentschrift EP 0 521 928 B 1, »1**.**1 Bindemitteldispersion A«, Seite 9, Zeilen 9 bis 28, verwendet wurde. Die Gewichtsanteile ergeben sich aus der Tabelle 1.

**Tabelle1: Zusammensetzung der Wasserbasislacke V 1, V 2 und 2.1 und 2.2**

| **GEWICHTSTEILE** | Vergleichsversuch V1 | Vergleichsversuch V2 | Beispiel 1 2 | Beispiel |
|---|---|---|---|---|
| Stufe (i) | | | | |
| Polyurethandispersion gem. EP 0 788 523 B2 | 13,0 | 13,0 | 13,0 | - |
| Bindemittel A gem. EP 0 521 928 - B1 | | - | - | 11,7 |
| Verlaufsmittel | 0,4 | 0,4 | 0,4 | 0,4 |
| Antischaummittel | 1,3 | 1,3 | 1,3 | 1,3 |
| Aerosil ® R972 | 0,3 | 0,3 | 0,3 | 0,3 |
| Aerosil ® R805 | 0,8 | 0,8 | 0,8 | 0,8 |
| Talkum | 3,0 | 3,0 | 3,0 | 3,0 |
| Entionisiertes Wasser | 1,3 | 1,3 | 1,3 | 1,3 |
| Flammruß | 0,7 | 0,7 | 0,7 | 0,7 |
| Sicomix ® Schwarz | 1,9 | 1,9 | 1,9 | 1,9 |
| Tiatandioxid | 0,6 | 0,6 | 0,6 | 0,6 |
| Füllstoff | 4,6 | 4,6 | 4,6 | 4,6 |
| Entionisiertes Wasser | 6,2 | 6,2 | 6,2 | 6,2 |
| **Summe Dispergiermischung:** | **34,1** | **34,1** | **34,1** | **32,8** |

| Stufe (ii) | | | | |
|---|---|---|---|---|
| Polyurethandispersion (EP 0 788 523 B2) | 31,6 | 31,6 | - | - |
| Polyurethandispersion (A/B) gemäß Herstellbeispiel 3 | - | - | 33,2 | 33,2 |
| Melaminharz 1 | 1,0 | 1,0 | 1,0 | 1,0 |
| Melaminharz 2 | - | 3,0 | 3,0 | 3,0 |
| Butylglykol . | 2,2 | 2,2 | 2,2 | 2,2 |
| Sulfonsäurekatalysator | 0,3 | 0,3 | 0,3 | 0,3 |
| Benetzungsadditiv der Firma Byk | 0,4 | 0,4 | 0,4 | 0,4 |
| Polyurethanverdickerlösung (2,5%ig) | 7,7 | 7,7 | 7,7 | 7,7 |
| Entionisiertes Wasser | 10 | 10 | 10 | 10 |
| **Summe:** | **53,2** | **56,2** | **57,8** | **57,8** |
| **Gesamtsumme:** | **87,3** | **90,3** | **91,8** | **89,7** |

### Herstellbeispiel 4

### Die Herstellung eines Wasserbasislack 3

In einem Mischgefäß wurden 7,3 Gewichtsteile einer 3-%-igen wässrigen Verdickungsmittellösung auf Basis eine Natrium-Magnesium-Schichtsilikates der Firma Laporte mit 20,6 Gewichtsteile deionisiertes Wasser und 20,0 Gewichtsteile einer 3%-igen wässrigen Lösung eines Polyacrylatverdickers der Firma Allied Colloids gemischt und mit einem Neutralisationsmittel auf einen pH-Wert von ca. 7,5 eingestellt.

Unter Rühren wurden zu dieser Mischung 3,9 Gewichtsteile des polyurethanmodifizierten Polyacrylats gemäß Beispiel D der DE 44 37 535 A1, 16,4 Gewichtsteile der Polyurethandispersion gemäß Beispiel 2 der DE 199 48 004 A1, 0,3 Gewichtsteile einer Lösung eines handelsüblichen Antischaummittels auf Basis eines ungesättigten verzweigten Diols, gelöst in Butylglykol und 15 Gewichtsteile einer Pigmentpastenmischung mit einem Pigmentgehalt von 2,1 Gew.-% Flammruß, 13,0 Gew.-% Heliogengrün L8730, 10,7 Gew.-% Palomarblue B4806 und einem Gehalt von 53 Gew.-% der EP 0 521 928 B 1, »1.1 Bindemitteldispersion A«, Seite 9, Zeilen 9 bis 28, gegeben.

Zu oben beschriebener Mischung wurde unter starkem Rühren eine Mischung bestehend aus 5,0 Gewichtsteilen einer Füllstoffpaste mit einem Aerosilgehalt von 10 Gew.-% und einem Gehalt an polyurethanmodifiziertem Polyacrylat gemäß Beispiel D der DE 44 37 535 A1 von 50 Gew.-%, 3,7 Gewichtnsteile Butylglykol und 4,6 Gewichtsteilen eines mit Methanol und Butanol veretherten Melaminharzes hinzugefügt.

In einem separaten Mischgefäß wurde eine Mischung aus 0,5 Gewichtsteilen einer handelsüblichen Aluminiumbronze (Alu-Stapa Hydrolux der Firma Eckart, Aluminiumgehalt 65 Gew.-%) und 0,7 Gewichtsteilen Butylglykol verrührt. Anschließend wurde diese Mischung der anderen Mischung unter starkem Rühren portionsweise hinzugefügt.

In einem separaten Mischgefäß wurden 0,7 Gewichtsteile eines handelsüblichen Perlglanzpigmentes (Iriodin ® 91034 Sterlin Silber WR der Firma Merk) und 0,9 Gewichtsteilen Butylglykol gemischt. Anschließend wurde diese Mischung der vorstehend beschriebenen unter starkem rühren portionsweise hinzugegeben.

Der so hergestellte zweite wässrige Lack wurde mit Neutralisationsmittel auf einem pH-Wert von 7,6 bis 8,0 und mit entionisiertem Wasser auf einer Spritzviskosität von 100 mPas bei einem 1000 sec⁻¹ eingestellt.

### Beispiele 3 und 4 und Vergleichsversuche V 3 und V 4

### Herstellung von Mehrschichtlackierungen nach dem erfindungsgemäßen Verfahren (Beispiele 3 und 4) und in bekannter Weise (Vergleichsversuche V 3 und V 4)

Für das Beispiel 3 wurde der Wasserbasislack 2.1 gemäß Beispiel 1 verwendet.

Für das Beispiel 4 wurde der Wasserbasislack 2.2 gemäß Beispiel 2 verwendet.

Für den Vergleichsversuch V 3 wurde der Wasserbasislacke V 1 gemäß Vergleichsversuch V 1 verwendet.

Für den Vergleichsversuch V 4 wurde der Wasserbasislack V 2 gemäß Vergleichsversuch V 2 verwendet.

### Allgemeine Herstellvorschriften:

### a) Aufbauten für die Haftungsnrüfunp und den Schwitzwassertest

Die Wasserbasislacke 2.1, 2.2, V 1 und V 2 wurden mit einer elektrostatischen Hochrotationsanlage (Behr Ecobell, 45000 U/min, Ausflussrate: 120 ml/min, Spannung: 60 kV) in einem Auftrag mit einer Trockenfilmdicke von 15 µm auf mit einer handelsüblichen Elektrotauchlackierung beschichtete phosphatierte Stahlbleche gespritzt. Die Applikation erfolgte bei einer Lufttemperatur von 23 °C und einer relativen Luftfeuchte von 60 %.

Die gespritzten Tafeln wurden während 5 min bei 23 °C und einer relativen Luftfeuchte von 60 % abgelüftet. Anschließend wurden sie während 5 min bei 70 °C Objekttemperatur in einem Umluftofen getrocknet, bei dem die Umluft einen Feuchtigkeitsgehalt von max. 5 - 8 g Wasser/Kg Luft aufwies.

Nach dieser Zwischentrocknung wurden die mit den Wasserbasislacken 2.1, 2.2, V 1 und V 2 beschichteten Tafeln mit dem Wasserbasislack 3 gemäß Herstellbeispiel 4 mit einer Trockenfilmdicke von 14 µm beschichtet und während 5 min bei 23 °C und einer relativen Luftfeuchte von 60 % abgelüftet und anschließend während 5 min bei 70 °C Objekttemperatur in einem Umluftofen getrocknet, bei dem die Umluft einen Feuchtigkeitsgehalt von max. 5 - 8 g Wasser/Kg Luft aufwies.

Abschließend wurden die Tafeln mit einer Pulverklarlack-Sluny 4 gemäß Beispiel 2 der DE 198 41 842 A1 mit einer Trockenfilmdichte von 40 µm überlackiert, während 5 min bei 23 °C und einer relativen Luftfeuchte von 60 % abgelüftet, während 5 min bei 50 °C Umlufttemperatur in einem Umluftofen vorgetrocknet, bei dem die Umluft einen Feuchtigkeitsgehalt von max. 3 - 6 g Wasser/Kg Luft aufwies, und anschließend wurden die Schichten 2, 3 und 4 bei 155 °C Umlufttemperatur 30 min lang gemeinsam eingebrannt.

### b) Aufbauten für die Kocherprüfung

Die Wasserbasislacke 2.1, 2.2, V 1 und V 2 wurden mit einer elektrostatischen Hochrotationsanlage (Behr Ecobell, 45000 U/min, Ausflussrate: 120 ml/min, Spannung: 60 kV) in einem Auftrag mit einer Trockenfilmdicke von 15 µm auf mit einer handelsüblichen Elektrotauchlackierung beschichtete phosphatierte Stahlbleche gespritzt. Die Applikation erfolgte bei einer Lufttemperatur von 23 °C und einer relativen Luftfeuchte von 60 %.

Die gespritzten Tafeln wurden 5 min bei 23 °C und einer relativen Luftfeuchte von 60 % abgelüftet. Anschließend wurden sie während 5 min bei 70 °C Objekttemperatur in einem Umluftofen getrocknet, bei dem die Umluft einen Feuchtegehalt von max. 5 - 8 g Wasser/Kg Luft aufwies.

Nach dieser Zwischentrocknung wurden die vier mit den Wasserbasislacken 2.1, 2.2, V 1 und V 2 beschichteten Tafeln mit dem Wasserbasislack 3 gemäß Herstellbeispiel 4 in Form eines Keils mit einer Trockenfilmdicke von 6 µm bis 40 µm überlackiert und während 5 min bei 23 °C und einer relativen Luftfeuchte von 60 % abgelüftet und anschließend während 5 min bei 70 °C Objekttemperatur in einem Umluftofen getrocknet, bei dem die Umluft einen Feuchtigkeitsgehalt von max. 5 - 8 g Wasser/Kg Luft aufwies.

Abschließend wurden die Tafeln mit einer Pulverklarlack-Slurry 4 gemäß Beispiel 2 der DE 198 41 842 A 1 mit einer Trockenfilmdichte von 40 µm überlackiert, während 5 min bei 23 °C und einer relativen Luftfeuchte von 60 % abgelüftet, während 5 min bei 50 °C Umlufttemperatur in einem Umluftofen vorgetrocknet, bei dem die Umluft einen Feuchtigkeitsgehalt von max. 3 - 6 g Wasser/Kg Luft aufwies, und anschließend wurden die Schichten 2, 3 und 4 bei 155 °C Umlufttemperatur 30 min lang gemeinsam eingebrannt.

### Prüfungen:

### a) Haftungsprüfung

Auf den so hergestellten Mehrschichtlackierungen der Beispiele 3 und 4 und der Vergleichsversuche V 3 und V 4 wurde nach einer Alterung von 12 h im Normklima ein Multischlagtest (VDA DIN 55996) durchgeführt. Die Tafeln wurden danach 60 s lang mit Wasser bestrahlt (Hochdruckreiniger der Firma Kärcher), wobei der Wasserdruck 67 bar, die Wassertemperatur 60 °C und der Abstand der Schlitzdüse zu den Tafeln 10 cm betrug. Hierbei bestrahlte die Düse auf den Tafeln jeweils eine Fläche der Abmessung 75 mm X 7 mm...

Die Benotung der Ergebnisse erfolgt visuell mittels einer Notenskala von 5 bis 0. Die Trennebene der Schädigung wird in Klammem angegeben.

Hierbei bedeutet 5 ein sehr schlechtes Ergebnis, 1 ein sehr gutes Ergebnis (geringfügige Schädigung) und 0 keine Schädigung. Die Ergebnisse sind in Tabelle 2 aufgeführt.

### b) Schwitzwassertest nach DIN 50017

Die nach der oben angegebenen Vorschrift hergestellten Prüftafeln wurden dem Schwitzwasserkonstantklima nach DIN 50017 ausgesetzt. Anschließend wurde die Zwischenschichthaftung mit dem Gitterschnitttest nach DIN EN ISO 2409 nach 1h und 24h Regeneration bestimmt. Die Ergebnisse sind in Tabelle 2 aufgeführt.

### c) Kocherprüfung

Die nach der oben angegebenen Vorschrift hergestellten Prüftafeln weisen eine Schichtdicke der Wasserbasislackierungen 2.1, 2.2, V 1 und V 2 von 15 µm, eine Schichtdicke der Wasserbasislackierungen 3 von 6 bis 40 µm und eine Schichtdicke der Klarlackierungen 4 von 40 µm auf. Die Kochergrenze gibt die Schichtdicke an, ab der Oberflächenstörungen (Kocher) in den Klarlackierungen 4 auftraten. Die Ergebnisse sind in Tabelle 2 aufgeführt.

**Tabelle 2: Versuchsergebnisse**

| | Vergleichsversuch V 3 | Vergleichsversuch V 4 | Bei-spiel 3 | Bei-spiel 4 |
|---|---|---|---|---|
| Haftungsprüfung | 5 (= Klarlackdelamination) | 5 (=Klarlackdelamination) | 1 | 1 |
| Flächenkocher* | 35 µm | 35 µm | 45 µm | 43 µm |
| Kantenkocher* | 80 µm | 92 µm | 110 µm | 107 µm |
| Gitterschnitttest 1h | GT5 | GT5 | GT0 | GT0 |
| Gitterschnitttest 24h | GT0 | GT0 | GT0 | GT0 |

| | | | | |
|---|---|---|---|---|
| *Flächenkocher: Summenschichtdicke, bestehend aus den Trockenfilmschichtdicken der jeweiligen Wasserbasislackierungen 2.1, 2.2, V 1 und V2 und der Wasserbasislackierung 3; Trockenfilmschichtdicke der Klarlackierung 4 = 40 µm. | | | | |
| *Kantenkocher: Summenschichtdicke, bestehend aus den Trockenfilmschichtdicken der jeweiligen Wasserbasislackierungen 2.1, 2.2, V 1 und V2 und der Wasserbasislackierung 3 plus Trockenfilmschichtdicke der Klarlackierung 4 auf der Kante. | | | | |

Die unterschiedlichen Formulierungen der Wasserbasislackierungen 2 (2.1 und 2.2 einerseits und V 1 und V 2 andererseits) hatten einen erheblichen Einfluss sowohl auf die störungsfrei erreichbare Schichtdicke der Wasserbasislackierungen 3, als auch auf die Zwischenschichthaftung innerhalb der Mehrschichtlackierungen, insbesondere auf die Haftung zwischen den Wasserbasislackierungen 3 und den Klarlackierungen 4. Das Anreibemittel war hierbei ohne Einfluss auf die erzielten Verbesserungen.

## Patentansprüche

1. Verfahren zur Verbesserung der Zwischenschichthaftung in einer Mehrschichtlackierung, die mit Hilfe eines integrierten Nass-in-nass-Verfahrens durch
(I) Applikation mindestens eines Grundierungsstoffes auf die Oberfläche eines Substrats und Trocknen der resultierenden Grundierungsschicht(en) 1, ohne sie vollständig zu härten, oder Härten der Grundierungsschicht(en) 1, wodurch mindestens eine Grundierung 1 resultiert,
(II) Applikation mindestens eines Wasserbasislacks 2 auf die äußere Oberfläche der Grundierungsschicht(en) 1 oder der Grundierungsschicht(en) 1 und Trocknen der resultierenden Wasserbasislackschicht(en) 2, ohne sie vollständig zu härten,
(III) Applikation mindestens eines Wasserbasislacks 3 auf die äußere Oberfläche der getrockneten Wasserbasislackschicht(en) 2 und Trocknen der resultierenden Wasserbasislackschicht(en) 3, ohne sie vollständig zu härten,
(IV) Applikation mindestens einer strukturviskosen Pulverklarlack-Slurry 4, herstellbar durch
(α) ein Sekundärdispersionsverfahren durch Emulgieren einer organischen Lösung, enthaltend Bindemittel und Vernetzer, wodurch eine Emulsion vom Typ Öl-in-Wasser resultiert, Entfernen des organischen Lösemittels oder der organische Lösemittel und teilweisen oder völligen Ersatz des entfernten Lösemittelvolumens durch Wasser, wodurch die Pulverklarlack- slurry mit sphärischen dimensionsstabilen Partikeln resultiert; oder
β) ein Schmelzeemulgierverfahren, bei dem man mindestens einen Bestandteil der Pulverklarlack-Slurry in flüssigem, insbesondere geschmolzenem, Zustand in einem wässrigen Medium emulgiert, wodurch sich eine wässrige Emulsion flüssiger Partikel bildet, und die Emulsion abkühlen lässt, sodass sich eine wässrige Suspension dimensionsstabiler Partikel bildet;
auf die äußere Oberfläche der getrockneten Wasserbasislackschicht(en) 3 und Trocknen der resultierenden Klarlackschicht(en) 4 und
(V) gemeinsame Härtung der getrockneten Klarlackschicht(en) 4, der getrockneten Wasserbasislackschicht(en) 3 und der getrockneten Wasserbasislackschicht(en) 2 sowie der Grundierungsschicht(en) 1, wodurch die Mehrschichtlackierung aus mindestens einer Grundierung 1, mindestens einer Wasserbasislackierung oder Funktions- oder Füllerlackierung 2, mindestens einer Wasserbasislackierung 3 und mindestens einer Klarlackierung 4 resultiert;
hergestellt wird, **dadurch gekennzeichnet, dass** der oder die in Stufe (II) eingesetzte(n) Wasserbasislack(e) 2 als Bindemittel mindestens ein dispergiertes Pfropfmischpolymerisat (A/B) enthalten, dessen Partikel aus einem hydrophoben Kern (A) aus mindestens einem einpolymerisierten olefinisch ungesättigten Monomeren (a) und einer hydrophilen Schale, die mindestens ein Polyurethan (B) enthält oder hieraus besteht, aufgebaut sind und durch die radikalische (Co)Polymerisation der Monomeren (a) in der Gegenwart mindestens eines Polyurethans (b), enthaltend mindestens eine olefinisch ungesättigte Gruppe, ausgewählt aus der Gruppe bestehend aus
- lateralen und terminalen Ethenylarylengruppen;
- lateralen olefinisch ungesättigten Gruppen, die an cycloaliphatische Gruppen gebunden sind, die Glieder der Polymerhauptketten darstellen;
- lateralen cycloolefinisch ungesättigten Gruppen, die Glieder der Polymerhauptketten darstellen;
- terminalen olefinisch ungesättigten Gruppen, die an cycloaliphatische Gruppen gebunden sind, die die Endgruppen der Polymerhauptketten darstellen;
- terminalen cycloolefinisch ungesättigten Gruppen, die die Endgruppen der Polymerhauptketten darstellen; und
- lateralen und terminalen, olefinisch ungesättigten Gruppen, die durch Umsetzung von Polyurethanen mit Anhydriden von alpha,beta-ungesättigten Carbonsäuren erhalten werden;
hergestellt werden.

2. Verfahren nach Anspruch 1, **dadurch gekennzeichnet, dass** die strukturviskose Pulverklarlack-Slurry 4 durch ein Sekundärdispersionsverfahren hergestellt wird.

3. Verfahren nach Anspruch 2, **dadurch gekennzeichnet, dass** die strukturviskose Pulverklarlack-Slurry 4 von organischen Lösemitteln und externen Emulgatoren frei ist und die dimensionsstabilen sphärischen Partikel eine mittlere Teilchengröße von 0,8 bis 20 µm und eine maximale Teilchengröße von 30 µm aufweisen.

4. Verfahren nach einem der Ansprüche 1 bis 3, **dadurch gekennzeichnet, dass** eine Ethenylarylengruppe der allgemeinen Formel I verwendet wird:
**CH**_{**2**}**=C(R)-A-** (I),
worin die Variable A für einen substituierten oder unsubstituierten C₆-C₂₀-Arylenrest und die Variable R für ein Wasserstoffatom, ein Halogenatom, eine Nitrilgruppe, einen substituierten oder unsubstituierten Alkyl-, Cycloalkyl-, Alkylcycloalkyl-, Cycloalkylalkyl-, Aryl-, Alkylaryl-, Cycloalkylaryl- Arylalkyl- oder Arylcycloalkylrest stehen.

5. Verfahren nach Anspruch 4, **dadurch gekennzeichnet, dass** der Rest R für ein Wasserstoffatom oder eine Methylgruppe, insbesondere eine Methylgruppe, steht.

6. Verfahren nach einem der Ansprüche 1 bis 5, **dadurch gekennzeichnet, dass** der Arylenrest 1,2-, 1,3- und/oder 1,4-Phenylen, insbesondere 1,3-Phenylen, ist.

7. Verfahren nach einem der Ansprüche 1 6, **dadurch gekennzeichnet, dass** die Ethenylarylengruppe über einen zweibindigen oder dreibindigen, mindestens eine Urethan- und/oder Hamstoffgruppe enthaltenden verknüpfenden Rest mit der Polyurethanhauptkette des Polyurethans (b) verbunden ist.

8. Verfahren nach Anspruch 7, **dadurch gekennzeichnet, dass** der verknüpfenden Rest mindestens eine der zweibindigen oder dreibindigen Gruppen der allgemeinen Formeln IIa bis IIc enthält
**-X-NH-C(O)-O-** (IIa),
**-X-NH-C(O)-NH-** (IIb)
oder
**-X-NH-C(O)-N<** (IIc),
worin X einen zweibindigen organischen Rest bezeichnet.

9. Verfahren nach einem der Ansprüche 1 bis 8, **dadurch gekennzeichnet, dass** es sich bei den olefinisch ungesättigten Gruppen, die an die cycloaliphatischen Gruppen gebunden sind, um (Meth)Acrylat-, Ethacrylat-, Crotonat-, Cinnamat-, Vinylether-, Vinylester-, Vinyl-, Dicyclopentadienyl-, Norbomenyl-, Isoprenyl-, Isopropenyl-, Allyl- und/oder Butenylgruppen; Dicyclopentadienyl-, Norbornenyl-, Isoprenyl-, Isopropenyl-, Allyl- oder Butenylethergruppen und/oder Dicyclopentadienyl-, Norbomenyl-, Isoprenyl-, Isopropenyl-, Allyl- und/oder Butenylestergruppen handelt.

10. Verfahren nach Anspruch 9, **dadurch gekennzeichnet** es sich bei den olefinisch ungesättigten Gruppen um Vinylgruppen handelt.

11. Verfahren nach einem der Ansprüche 1 bis 10, **dadurch gekennzeichnet, dass** sich die cycloaliphatischen Gruppen von Cycloaliphaten mit 4 bis 12 Kohlenstoffatomen im Molekül und die cycloolefinischen Gruppen von Cycloolefinen mit 4 bis 12 Kohlenstoffatomen im Molekül ableiten.

12. Verfahren nach Anspruch 11, **dadurch gekennzeichnet, dass** sich die cycloaliphatischen Gruppen von Cyclobutan, Cyclopentan, Cyclohexan, Cycloheptan, Cycloctan, Norboman, Bicyclo[2.2.2]octan, Decalin, Hydroindan, Dicylcopenten, Tricyclodecan oder Adamantan und die cycloolefinischen Gruppen von Cyclopenten, Cyclohexen, Cyclohepten, Cycloocten, Norbornen, Bicyclo[2.2.2]octen oder Dicylclopenten ableiten.

13. Verfahren nach einem der Ansprüche 1 bis 12, **dadurch gekennzeichnet, dass** die Anhydride der alpha,beta-ungesättigten Carbonsäuren aus der Gruppe, bestehend aus Acrylsäure-, Methacrylsäure-, Ethacrylsäure und Zimtsäureanhydrid, ausgewählt wird.

14. Verfahren nach Anspruch 13, **dadurch gekennzeichnet, dass** Methacrylsäureanhydrid verwendet wird.

## Claims

1. Process for improving the intercoat adhesion in a multicoat paint system produced by means of an integrated wet-on-wet process by
(I) applying at least one primer material to the surface of the substrate and drying the resulting primer film(s) 1, without fully curing it (them), or curing the primer film(s) 1 to give at least one primer coat 1,
(II) applying at least one aqueous basecoat material 2 to the outer surface of the primer film(s) 1 or primer coat(s) 1 and drying the resulting aqueous basecoat film(s) 2 without fully curing it (them),
(III) applying at least one aqueous basecoat material 3 to the outer surface of the dried aqueous basecoat film(s) 2 and drying the resulting aqueous basecoat film(s) 3 without fully curing it (them),
(IV) applying at least one pseudoplastic powder clearcoat slurry 4 preparable by means of
(α) a secondary dispersion process by emulsifying an organic solution comprising binder and crosslinker to give an emulsion of the oil-in-water type, removing the organic solvent or solvents, and replacing some or all of the subtracted solvent volume by water, to give the powder clearcoat slurry comprising spherical dimensionally stable particles, or by means of
(β) a melt emulsification process in which at least one constituent of the powder clearcoat slurry is emulsified in the liquid state, in particular in the melt state, in an aqueous medium to form an aqueous emulsion of liquid particles and the emulsion is cooled to form an aqueous suspension of dimensionally stable particles,
to the outer surface of the dried aqueous basecoat film(s) 3 and drying the resulting clearcoat film(s) 4, and
(V) jointly curing the dried clearcoat film(s) 4, the dried aqueous basecoat film(s) 3, and the dried aqueous basecoat film(s) 2 and also the primer film(s) 1 to give the multicoat paint system composed of at least one primer coat 1, at least one aqueous basecoat or functional coat or surfacer coat 2, at least one aqueous basecoat 3, and at least one clearcoat 4;
**characterized in that** the aqueous basecoat material(s) 2 employed in stage (II) comprise(s) as binder at least one dispersed graft copolymer (A/B) whose particles are composed of a hydrophobic core (A) of at least one copolymerized olefinically unsaturated monomer (a) and a hydrophilic shell (B) which comprises or consists of at least one polyurethane (b) and is (are) prepared by subjecting the monomers (a) to free-radical (co)polymerization in the presence of at least one polyurethane (b) containing at least one olefinically unsaturated group selected from the group consisting of
- lateral and terminal ethenylarylene groups;
- lateral olefinically unsaturated groups attached to cycloaliphatic groups which constitute members of the main polymer chains;
- lateral cycloolefinically unsaturated groups which constitute members of the main polymer chains;
- terminal olefinically unsaturated groups attached to cycloaliphatic groups which constitute the end groups of the main polymer chains;
- terminal cycloolefinically unsaturated groups which constitute the end groups of the main polymer chains; and
- lateral and terminal olefinically unsaturated groups obtained by reacting polyurethanes with anhydrides of alpha,beta-unsaturated carboxylic acids.

2. Process according to Claim 1, **characterized in that** the pseudoplastic powder clearcoat slurry 4 is prepared by a secondary dispersion process.

3. Process according to Claim 2, **characterized in that** the pseudoplastic powder clearcoat slurry 4 is free from organic solvents and external emulsifiers and the dimensionally stable spherical particles have an average size of from 0.8 to 20 µm and a maximum size of 30 µm.

4. Process according to any of Claims 1 to 3, **characterized in that** an ethenylarylene group of the general formula I is used:
**CH**_{**2**}**=C(R)-A-** (I),
in which the variable A stands for a substituted or unsubstituted C₆-C₂₀ arylene radical and the variable R stands for a hydrogen atom, a halogen atom, a nitrile group or an unsubstituted or substituted alkyl, cycloalkyl, alkylcycloalkyl, cycloalkylalkyl, aryl, alkylaryl, cycloalkylaryl, arylalkyl or arylcycloalkyl radical.

5. Process according to Claim 4, **characterized in that** the radical R stands for a hydrogen atom or a methyl group, in particular a methyl group.

6. Process according to any of Claims 1 to 5, **characterized in that** the arylene radical is 1,2-, 1,3- and/or 1,4-phenylene, in particular 1,3-phenylene.

7. Process according to any of Claims 1 to 6, **characterized in that** the ethenylarylene group is connected to the main chain of the polyurethane (b) by way of a divalent or trivalent linking radical containing at least one urethane and/or urea group.

8. Process according to Claim 7, **characterized in that** the linking radical contains at least one of the divalent or trivalent groups of the general formulae IIa to IIc
**-X-NH-C(O)-O-** (IIa),
**-X-NH-C(O)-NH-** (IIb)
or
**-X-NH-C(O)-N<** (IIc),
in which X is a divalent organic radical.

9. Process according to any of Claims 1 to 8, **characterized in that** the olefinically unsaturated groups attached to the cycloaliphatic groups are (meth)acrylate, ethacrylate, crotonate, cinnamate, vinyl ether, vinyl ester, vinyl, dicyclopentadienyl, norbornenyl, isoprenyl, isopropenyl, allyl and/or butenyl groups; dicyclopentadienyl ether, norbornenyl ether, isoprenyl ether, isopropenyl ether, allyl ether or butenyl ether groups; and/or dicyclopentadienyl ester, norbornenyl ester, isoprenyl ester, isopropenyl ester, allyl ester and/or butenyl ester groups.

10. Process according to Claim 9, **characterized in that** the olefinically unsaturated groups are vinyl groups.

11. Process according to any of Claims 1 to 10, **characterized in that** the cycloaliphatic groups are derived from cycloaliphatics having from 4 to 12 carbon atoms in the molecule and the cycloolefinic groups are derived from cycloolefins having from 4 to 12 carbon atoms in the molecule.

12. Process according to Claim 11, **characterized in that** the cycloaliphatic groups are derived from cyclobutane, cyclopentane, cyclohexane, cycloheptane, cyclooctane, norbornane, bicyclo[2.2.2]octane, decalin, hydroindane, dicyclopentene, tricyclodecane or adamantane, and the cycloolefinic groups from cyclopentene, cyclohexene, cycloheptene, cyclooctene, norbornene, bicyclo[2.2.2]octene or dicyclopentene.

13. Process according to any of Claims 1 to 12, **characterized in that** the anhydrides of alpha,beta-unsaturated carboxylic acids are selected from the group consisting of acrylic, methacrylic, ethacrylic, and cinnamic anhydride.

14. Process according to Claim 13, **characterized in that** methacrylic anhydride is used.

## Revendications

1. Procédé en vue de l'amélioration de l'adhésion de couches intermédiaires dans un vernissage multicouches, qui est fabriqué à l'aide d'un procédé mouillé-sur-mouillé intégré par
(I) application d'au moins une substance d'apprêt sur la surface d'un substrat et séchage de la ou des couches d'apprêt résultantes 1, sans les durcir complètement ou durcissement de la ou des couches d'apprêt 1, d'où résulte au moins une peinture d'apprêt 1,
(II) application d'au moins un vernis à base d'eau 2 sur la surface externe de la ou des couches d'apprêt 1 et séchage de la ou des couches de vernis à base d'eau 2, sans les durcir complètement,
(II) application d'au moins un vernis à base d'eau 3 sur la surface externe de la ou des couches à base d'eau séchées 2 et séchage de la ou des couches de vernis à base d'eau résultantes 3, sans les durcir complètement,
(IV) application d'au moins une suspension de vernis clair en poudre à viscosité de structure 4, que l'on peut fabriquer par
α) un procédé de dispersion secondaire par émulsification d'une solution organique, contenant liant et agent mouillant, d'où résulte une émulsion du type huile-dans-eau, élimination du solvant organique ou des solvants organiques et remplacement partiel ou complet du volume de solvant éliminé par de l'eau, d'où résulte une suspension de vernis clair en poudre à particules sphériques, stables pour ce qui est des dimensions; ou
β) un procédé d'émulsification à l'état fondu, lors duquel on procède à l'émulsification, dans un milieu aqueux, d'au moins un constituant de la suspension de vernis clair en poudre à l'état fluide, en particulier à l'état fondu, une émulsion aqueuse de particules fluides se formant ainsi et l'émulsion pouvant se refroidir, de telle sorte qu'il se forme une suspension aqueuse de particules stables pour ce qui est des dimensions;
sur la surface externe de la ou des couches de vernis à base aqueuse séchées 3 et séchage de la ou des couches de vernis clair résultantes 4 et
(V) durcissement conjoint de la ou des couches de vernis clairs séchées 4, de la ou des couches de vernis à base d'eau séchées 3 et de la ou des couches à base d'eau 2 ainsi que de la ou des couches d'apprêt 1, d'où résulte un vernissage multicouches fait d'au moins une peinture d'apprêt 1, d'au moins un vernissage à base d'eau ou d'un vernissage à fonction ou à charge 2, d'au moins un vernissage à base d'eau 3 et d'au moins un vernissage clair 4;
**caractérisé en ce que** la ou les vernis à base d'eau 2, utilisés dans l'étape (II), contiennent en tant que liant au moins un polymère mixte de greffage dispersé (A/B), dont les particules sont constituées d'un coeur hydrophobe (A) fait d'au moins un monomère polymérisé oléfiniquement insaturé (a) et d'une enveloppe hydrophile, qui contient au moins un polyuréthanne (B) ou qui en est composé et sont fabriqués grâce à la (co)polymérisation radicalaire des monomères (a) en présence d'au moins un polyuréthanne (b), contenant au moins un groupement oléfiniquement insaturé, sélectionné parmi le groupe constitué
- de groupements éthylène-arylène latéraux et terminaux;
- des groupements latéraux oléfiniquement insaturés, qui sont liés à des groupements cycloaliphatiques, qui constituent les membres des chaînes principales polymères;
- des groupements latéraux cyclo-oléfiniquement insaturés, qui constituent les membres des chaînes principales polymères;
- des groupements terminaux oléfiniquement insaturés, qui sont liés à des groupements cycloaliphatiques, qui constituent les membres terminaux des chaînes principales polymères;
- des groupements terminaux cyclo-oléfiniquement insaturés, qui constituent les membres terminaux des chaînes principales polymères; et
- des groupements latéraux et terminaux, oléfiniquement insaturés, qui sont obtenus par réaction de polyuréthannes avec des anhydrides d'acides carboxyliques alpha, bêta-insaturés.

2. Procédé selon la revendication 1, **caractérisé en ce que** la suspension de vernis clair en poudre à viscosité de structure 4 est fabriquée par l'intermédiaire d'un procédé de dispersion secondaire.

3. Procédé selon la revendication 2, **caractérisé en ce que** la suspension de vernis clair en poudre à viscosité de structure 4 est exempte de solvants organiques et d'émulsifiants externes et **en ce que** les particules sphériques stables pour ce qui est des dimensions présentent une granulométrie moyenne de 0,8 à 20 µm et une granulométrie maximale de 30 µm.

4. Procédé selon l'une quelconque des revendications 1 à 3, **caractérisé en ce que** l'on utilise un groupement éthylène-arylène de la formule générale I:
CH2=C(R)-A- (I),
où la variable A désigne un radical C₆-C₂₀-arylène, substitué ou non substitué, et la variable R désigne un atome d'hydrogène, un atome d'halogène, un groupement nitrile, un radical, substitué ou non substitué, alkyle, cycloalkyle, alkylcycloalkyle, cycloalkylalkyle, aryle, alkylaryle, cycloalkylaryl, arylalkyle ou arylcycloalkyle.

5. Procédé selon la revendication 4, **caractérisé en ce que** le radical R désigne un atome d'hydrogène ou un groupement méthyle, en particulier un groupement méthyle.

6. Procédé selon l'une quelconque des revendications 1 à 5, **caractérisé en ce que** le radical arylène est le 1,2-, 1,3- et/ou 1,4-phénylène, en particulier 1,3-phénylène.

7. Procédé selon l'une quelconque des revendications 1 à 6, **caractérisé en ce que** le groupement éthylène-arylène est relié par l'intermédiaire d'un radical divalent ou trivalent, contenant au moins un groupement uréthane et/ou urée, avec la chaîne principale de polyuréthanne du polyuréthanne (b).

8. Procédé selon la revendication 7, **caractérisé en ce que** le radical connectant contient au moins un des groupements divalents ou trivalents de la formule générale IIa à IIc
-X-NH-C(O)-O- (IIa),
-X-NH-C(O)-NH- (IIb)
ou
-X-NH-C(O)-N< (IIc)
où x désigne un radical organique divalent.

9. Procédé selon l'une quelconque des revendications 1 à 8, **caractérisé en ce qu'**il s'agit, dans le cas des groupements oléfiniquement insaturés, qui sont liés aux groupements cycloaliphatiques, de groupements (méth)acrylate, éthacrylate, crotonate, cinnamate, éther vinylique, ester vinylique, vinyle, dicyclopentadiényle, norbornényle, isoprényle, isopropényle, allyle et/ou butényle; de groupements d'éthers de dicyclopentadiényle, de norbornényle, d'isoprényle, d'isopropényle, d'allyle ou de butényle et/ou de groupements d'esters de dicyclopentadiényle, de norbornényle, d'isoprényle, d'isopropényle, d'allyle ou de butényle.

10. Procédé selon la revendication 9, **caractérisé en ce qu'**il s'agit, dans le cas des groupements oléfiniquement insaturés, de groupements vinyliques.

11. Procédé selon l'une quelconque des revendications 1 à 10, **caractérisé en ce que** les groupements cycloaliphatiques dérivent de cycloaliphates ayant de 4 à 12 atomes de carbone dans la molécule et **en ce que** les groupements cyclo-oléfiniques dérivent de cyclo-oléfines ayant de 4 à 12 atomes de carbone dans la molécule.

12. Procédé selon la revendication 11, **caractérisé en ce que** les groupements cycloaliphatiques dérivent du cyclobutane, du cyclopentane, du cyclohexane, du cycloheptane, du cycloctane, du norbornane, du bicyclo[2.2.2]octane, de la décaline, de l'hydroindane, du dicyclopentène, du tricyclodécane ou de l'adamantane et **en ce que** les groupements cyclo-oléfiniques dérivent du cyclopentène, du cyclohexène, du cycloheptène, du cyclo-octène, du norbornène, du bicyclo[2.2.2]octène ou du dicyclopentène.

13. Procédé selon l'une quelconque des revendications 1 à 12, **caractérisé en ce que** l'anhydride des acides carboxyliques alpha, bêta-insaturés est sélectionné parmi le groupe constitué de l'acide acrylique, de l'acide méthacrylique, de l'acide éthacrylique et de l'anhydride de l'acide cinnamique.

14. Procédé selon la revendication 13, **caractérisé en ce que** l'on utilise l'anhydride de l'acide méthacrylique.
